Europäisches Patentamt

European Patent Office

Office européen des brevets

(19)

(11) Veröffentlichungsnummer: **0 005 247**
A2

# EUROPÄISCHE PATENTANMELDUNG

(12)

(21) Anmeldenummer: 79101276.8

(22) Anmeldetag: 27.04.79

(51) Int. Cl.²: **A 01 K 31/06,** F 16 C 11/04

(30) Priorität: 27.04.78 DE 2818408
13.03.79 DE 2909773
13.03.79 DE 2909751

(43) Veröffentlichungstag der Anmeldung: 14.11.79
Patentblatt 79/23

(84) Benannte Vertragsstaaten: BE FR IT NL

(71) Anmelder: Jüstl, Fritz, Starkenburgring 5, D-6057
Dietzenbach (DE)

(72) Erfinder: Jüstl, Fritz, Starkenburgring 5, D-6057
Dietzenbach (DE)

(74) Vertreter: Kantner, Hans-Joachim, Dipl.-Ing.,
Darmstädter Strasse 8, D-6070 Langen (DE)

(54) **Heimtierkäfig.**

(57) Die Erfindung erbringt einen neuartigen Heimtierkäfig, insbesondere Papageienkäfig, der in universeller Weise für die Haltung sonst nur sehr schwierig zu haltender Heimtiere, wie insbesondere Papageien oder Äffchen oder dergleichen, nicht nur in Zoofachgeschäften oder anderen Tierhandlungen, wo solche Tiere dem Käuferpublikum dargeboten werden müssen und mehr oder weniger starken Belästigungen durch dieses ausgesetzt sind, sondern auch für die häusliche Tierhaltung Verwendung finden kann, bei der es auf einen guten Kontakt zwischen Mensch und Tier ankommt, durch den die Gewöhnung beider aneinander verbessert und Zähmung bzw. Dressur des Tieres erleichtert wird, wobei neben Vermeidung von zeitlichem und körperlichem Aufwand sowie Einsparung von Kosten auch die tierpsychologische Situation für die im Käfig zu haltenden Tiere wesentlich verbessert wird, und zwar dies dadurch, daß die den Raum oberhalb einer Bodenschale begrenzende Käfigkuppel aus mindestens zwei Segmenten gebildet ist, von denen mindestens eines standfest mit der Bodenschale verbunden und mindestens eines mit zumindest dem überwiegenden Teil seiner Länge gegenüber einem benachbarten standfest gehaltenen Segment verschwenkbar ist, wobei im übrigen verschiedene Möglichkeiten geboten werden, psychologische und/oder physiologische Schädigungen der Käfiginsassen wirkungsvoll auch dann zu vermeiden, wenn beispielsweise zur Reinigung oder Wartung die Käfigkuppel von der Bodenschale abgenommen wird, indem dafür gesorgt ist, daß die Käfiginsassen zusammen mit der Käfigkuppel abgehoben werden.

Fritz Jüstl
Starkenburgring 5
6057 Dietzenbach
==================


Heimtierkäfig
=============


Die Erfindung bezieht sich auf einen Heimtierkäfig, der sich insbesondere für die Haltung von Papageien eignet, und betrifft insbesondere einen solchen Heimtierkäfig mit einer den Raum oberhalb
einer Bodenschale begrenzenden Käfigkuppel vorzugsweise aus Gitterwerk.

Solche Käfige werden zu unterschiedlichen Zwecken bei der Haltung
von Heimtieren, wie insbesondere Papageien, eingesetzt. Eine der bevorzugten Verwendungsarten solcher Käfige ist deren Nutzung durch Zoohändler und dgl., bei denen beispielsweise Papageien überwiegend
in den Käfigen und nicht auf sogenannten Papageienständern gehalten
werden, an denen notwendigerweise das Tier angekettet oder angebunden
sein muß, um sein unbeabsichtigtes Entweichen zu verhindern.

Abgesehen davon, daß bei der heutigen Einstellung der Gesellschaft
zur Heimtierhaltung im allgemeinen und zur Behandlung solcher Tiere
insbesondere im Hinblick auf deren freie Beweglichkeit in einem
vorgegebenen Lebensraum diese Art der Haltung solcher Tiere auf
einem Papageienständer oder Sitzbaum od. dgl. den Unwillen des
Käuferpublikums erregen und zu nicht unerheblichen Umsatzeinbußen
des betreffenden Zoohändlers führen würde, wenn nicht gar die Ursache für eine Schädigung seines geschäftlichen Rufes sein könnte,
ist diese Art der Haltung solcher Tiere aber auch aus technischen
und gesundheitlichen sowie insbesondere auch tierpsychologischen
Gründen nachteilig. Es muß nämlich für einen solchen Papageienständer
oder Sitzbaum od. dgl. stets ein einigermaßen geschützter Platz derart
vorgesehen werden, daß nicht durch in einem Zoofachgeschäft od. dgl.
unvermeidbares Hantieren mit beispielsweise größeren Gitterteilen
diese in den somit ungesicherten Freiraum für das Tier eindringen
und dieses entweder verletzen oder beschädigen oder aber auch nur
aufscheuchen. Ein solcher Platz ist in einem Zoogeschäft häufig
nicht zur Verfügung zu stellen. Häufig kommt es vor, daß aus solchen
Raumnotgründen ein solcher Papageienständer oder Sitzbaum od. dgl.
an einer Stelle des Geschäftes aufgestellt werden muß, welche für
das Tier ungünstige Bedingungen bezüglich beispielsweise Luftzuges,
Sonneneinstrahlung oder Belichtung aufweisen. Dies kann eine Quelle
für gravierende Schädigungen der Gesundheit des betreffenden Tieres
sein. Nicht selten kommt es erfahrungsgemäß aus diesen Gründen zu
nicht unerheblichen Ausgaben für Tierarztkosten oder gar zum Verlust
des gesamten Wertes des betreffenden Tieres durch dessen Verenden.
Aus tierpsychologischer Sicht ist insbesondere das ständige Ausgesetztsein des Tieres gegenüber unkontrollierbaren Zudringlichkeiten des
Käuferpublikums zu erwähnen, welches erfahrungsgemäß deswegen zu
Störungen der natürlichen Verhaltensweise eines solchen Tieres zu
führen pflegt, weil dieses auch bei noch so großer angeborener
Zutraulichkeit und Menschenfreundlichkeit sich dann, wenn es bezüglich seiner Lernfähigkeit und/oder seines Spieltriebes voll befriedigt und ausgelastet ist, nicht mehr so zurückziehen kann, daß es
die für die Rekreation benötigte Ruhe vor menschlichen Zudringlich-

- 3 -

keiten hat.

Aus diesem Grunde benutzt man in solchen Fachgeschäften die in
der Fachwelt als Papageienkäfige bekannten größeren Heimtierkäfige
für die Unterbringung solcher zur Schau zu stellenden Tiere, wobei im übrigen diese Käfige keineswegs auf die Haltung von Papageien in ihnen beschränkt sind, sondern auch für die Aufnahme von
z.B. kleinen Äffchen od. dgl. Verwendung zu finden pflegen. Kleinere
Ausführungen solcher bekannter Käfige weisen eine Schale auf, in
die eine Käfigkuppel aus Gitterwerk eingestellt wird. Zum Entnehmen
des Tieres aus dem Inneren eines solchen Käfigs wird dessen Käfigkuppel abgehoben, so daß der freie Zugriff zum Tier möglich ist.
Dies bedingt jedoch nicht unbeträchtliche Erfahrung mit dem Umgang
des jeweiligen Tieres und eine gewisse Geschicklichkeit, da beim
Abheben der Käfigkuppel die Gefahr unvermeidbar ist, daß das Tier
aufgescheucht wird, zu flattern und/oder mit den Flügeln zu schlagen beginnt und/oder entweicht. Der hiermit verbundene Aufwand für
das Geschäftspersonal für das Beruhigen bzw. Einfangen des Tieres
und die erfahrungsgemäß damit einhergehenden, vom Menschen oder
dem Tier verursachten Schäden an anderen ausgestellten Gegenständen
liegen ebenso auf der Hand wie die Beeinträchtigungen des natürlichen Wohlbefindens des Tieres sowohl in körperlicher, als auch
insbesondere psychologischer Sicht, die sich insbesondere in Aufgeregtsein, Unruhe oder sogar Aggressivität des Tieres ausdrücken
können, welche insgesamt seine anschließende Transportfähigkeit
für den Käufer nicht unbeträchtlich zu beeinträchtigen pflegen, ganz
abgesehen davon, daß auch hierdurch je nach Art des Tieres nicht
nur spätere Verhaltensstörungen, sondern auch echte gesundheitliche
Disharmonien verursacht werden können, welche wiederum die Ursache
für weitere Kosten auf Seiten des Käufers für deren Behebung zu
sein pflegen, wobei nicht außer Acht gelassen werden darf, daß sie
nicht selten der Grund dafür sind, daß ein Heimischmachen des Tieres
in der neuen Umgebung beim Käufer zumindest beträchtlich erschwert
und hinsichtlich der erforderlichen Zeitdauer verlängert, wenn nicht

- 4 -

gar unmöglich wird, indem ein solches erregtes Tier neben seiner
psychologischen Überbeanspruchung einen echten physiologischen
Zusammenbruch nach Art eines Kreislaufzusammenbruches erleidet.

Um diesen Nachteilen zu begegnen, hat man einerseits solchen Heimtierkäfigen ein größeres Aufnahmevolumen gegeben und andererseits
in ihrer Käfigkuppel eine Tür vorgesehen. Hierdurch werden vergleichsweise einige Vorteile erzielt. Es wird ein größerer Freiraum für
die beliebige Beweglichkeit des Tieres in einem solchen Käfig geboten. Gleichzeitig entfällt die Notwendigkeit, eine hierdurch
besonders schwer und damit auch unhandlich werdende Käfigkuppel
von der Bodenschale abnehmen und handhaben zu müssen. Andererseits
ergeben sich bei einer solchen bekannten Käfigausführung aber andere
Nachteile. Während nämlich das Einbringen eines solchen Tieres,
beispielsweise eines Papageies, in den Käfig verhältnismäßig einfach
ist, indem man das Tier in der Hand hat und nur durch die geöffnete
Türöffnung in der Käfigkuppel hindurch ins Käfiginnere hineinzustoßen braucht, pflegt das Entnehmen des Tieres aus einem solchen
Käfig verhältnismäßig große Schwierigkeiten zu bereiten, die um so
größer werden, je großvolumiger die Käfigkuppel entsprechend den
Gesichtspunkten neuester Erkenntnisse moderner Tierhaltung ist. Soll
nämlich ein solches Tier verkauft werden, muß der Verkäufer mit
seinem Arm durch die geöffnete Käfigkuppeltür ins Käfiginnere hereinfassen und das Tier zu erhaschen versuchen. Häufig ist dieses aber
gerade wegen seines Ausgesetztseins gegenüber ständig neuen Menschen
besonders auf ein Ausweichen bedacht und widersetzt sich daher durch
Flucht in die hintersten Bereiche der Käfigkuppel dem Ergriffenwerden. Die mit dem Erhaschen des Tieres notwendigerweise verbundene
Prozedur pflegt ein solches Tier gleichfalls wieder so in Erregung
zu bringen, daß die oben bereits geschilderten Nachteile für dessen
körperliche und seelische Verfassung und die daraus resultierenden
nachteiligen Kostenfolgen häufig auch bei Einsatz eines solchen bekannten Käfigs für die Haltung solcher Tiere in Zoogeschäften od.dgl.
unvermeidbar sind.

Nachteilige Folgen für die Haltung solcher Tiere auf Papageienständern,
Sitzbäumen od. dgl. einerseits und in Käfigen der beschriebenen
Art andererseits treten jedoch nicht nur auf Seiten beispielsweise
der Zoofachgeschäfte auf, sondern auch beim Tierliebhaber selbst,
welcher diese Tiere in seinem eigenen Wohnraum zu halten pflegt.

Wird ein solches Tier auf einem Papageienständer, Sitzbaum od.dgl.
gehalten, so muß es einerseits gegenüber diesem festgelegt, beispielsweise angekettet oder angebunden sein, um seinen eigenen
Freiraum zu begrenzen und zu vermeiden, daß in der Wohnung Schaden
angerichtet wird. Durch dieses Anbinden am Papageienständer, Sitzbaum od. dgl. treten praktisch unvermeidbar nach mehr oder weniger
kurzer Zeit und mehr oder weniger schwer die Symptome der sogenannten
"Kettenhundpsychose" auf, die seelische Verhaltensstörungen des
Tieres ausdrücken. Das Tier wird insbesondere im Hinblick auf
seine Kontaktfreudigkeit dem Menschen gegenüber geschädigt und braucht
für seine Zähmung und/oder Dressur ebenso wie für seine Eingewöhnung in sein neues Habitat erfahrungsgemäß mehr Zeit, als wenn
es ohne untrennbare Bindung an einen bestimmten Sitzort gehalten
wird. Hinzu kommt ferner, daß eine gewisse Verschmutzung der Umgebung durch beispielsweise Exkremente, Futterreste oder herumfliegende Federn od. dgl. unvermeidbar ist.

Aus diesem Grunde werden erfahrungsgemäß die meisten in Wohnungen
gehaltenen Papageien in Käfige gesteckt. Für die häusliche Haltung
solcher Tiere haben sich dabei bekannte Käfige, bei denen die Käfigkuppel zum Öffnen des Käfigs nach oben von der Bodenschale abzuheben ist, aus den bereits beschriebenen Gründen nicht bewährt.

Man benutzt daher bisher bevorzugt solche Käfige, die eine durch eine
Tür in ihrer Käfigkuppel verschließbare Öffnung aufweisen. Es ist
nämlich eine bekannte Tatsache, daß fast alle Papageienbesitzer engen
Kontakt zu ihrem Tier pflegen wollen und es deshalb häufig wenigstens
einmal am Tag aus dem Käfig herauslassen. Hier beginnt ein weiteres
gravierendes Problem, welches durch die Ausführung dieser bekannten Käfige bedingt ist. Einerseits trauen sich häufig nämlich scheue
oder ängstliche Tiere nicht, den auch für sie erkennbar als Lebensraum abgegrenzten Käfigraum zu verlassen. Häufig haben aber auch
brave oder selbst zutrauliche und sogar neugierige oder unternehmungslustige Tiere Schwierigkeiten, die geöffnete und sogar durch
Lockungen kenntlich gemachte Käfigkuppelöffnung zum Austritt aus
dem Käfiginneren zu finden. Es verursacht also das Entnehmen des
Tieres aus dem Käfiginneren wiederum eine gewisse Beunruhigung
beim Tier und einen häufig nicht unbeträchtlichen Aufwand beim
Tierhalter.

Noch schwieriger aber ist das Problem, die Tiere wieder in den
Käfig hineinzubugsieren. Es hat sich nämlich gezeigt, daß in
solchen Käfigen gehaltene Tiere, hatten sie einmal die Möglichkeit,
sich außerhalb des durch die Käfigkuppel eingegrenzten Raumes zu
bewegen, diesen erweiterten Bewegungsraum zu bevorzugen und eine
Abneigung gegen das Wiedereinbringen ins Käfiginnere zu zeigen
pflegen, wobei diese je nach Tierart und/oder individuellem
Naturell des Tieres auf Neugier bzw. Erkundungstrieb bezüglich der
Außenumgebung seines gewohnten Habitats oder aber auf psychologischer
Abneigung gegenüber Eingrenzung seines Bewegungsraumes durch die
Käfigkuppel oder aber gegenüber dem Passieren der verschließbaren
Öffnung derselben beruhen kann.

Auf jeden Fall hat es sich gezeigt, daß man häufig solche Tiere nur
unter großem Aufwand und unter Verwendung von Lockmitteln ins Innere
eines solchen Käfigs zurückbringen kann. Gerade dieser hierfür benötigte Aufwand aber bringt wiederum neben Unordnung und Schmutz
auch die unerwünschten Aufregungen für Mensch und insbesondere auch
Tier mit sich. Auch aus diesem Grunde ist also die bekannte großvolumige Käfigausführung mit Ein- und Ausbringöffnung in der Käfigkuppel auch bei Einsatz für die häusliche Tierhaltung nachteilig.

Ausgehend von der Erkenntnis der grundlegenden Ursache für das erkennbare Abneigungsverhalten der meisten in solchen Käfigen zu haltenden Tiere gegenüber dem Durchschlüpfen durch diese Öffnung in der

Käfigkuppel ist der Erfindung die Aufgabe gesetzt, mit möglichst
einfachen und kostengünstigen Mitteln einen Heimtierkäfig
gattungsgemäßer Art so auszugestalten, daß er unter Vermeidung
der Nachteile bekannter Ausführungen in universeller Weise
für die Haltung solcher Heimtiere, wie insbesondere Papageien
oder Äffchen od. dgl., nicht nur in Zoofachgeschäften oder
anderen Tierhandlungen, wo solche Tiere dem Käuferpublikum
dargeboten werden müssen und mehr oder weniger starken Belästigungen durch dieses ausgesetzt sind, sondern auch für die häusliche Tierhaltung Verwendung finden kann, bei der es gerade
entgegengesetzt der Verwendung in Zoofachgeschäften od. dgl.
auf einen guten Kontakt zwischen Mensch und Tier ankommt, durch
den die Gewöhnung beider aneinander verbessert und Zähmung bzw.
Dressur des Tieres erleichtert wird, wobei neben Vermeidung
von zeitlichem und körperlichem Aufwand sowie Einsparung von
Kosten auch die tierpsychologische Situation für die im Käfig
zu haltenden Tiere dadurch wesentlich verbessert wird, daß zwar
eine Entnahme derselben aus dem Käfig ebenso wie deren Rückverbringung in diesen jederzeit möglich ist, dies jedoch ohne Erschütterungen des Käfigs oder beschwerliche Hantierungen mit
den damit einhergehenden Aufregungen für Mensch und Tier bewerkstelligt werden kann und dadurch psychologische und/oder physiologische Schädigungen des Tieres wirkungsvoll praktisch vermieden werden können.

Dies wird nach der Erfindung in überraschend einfacher Weise
dadurch erreicht, daß bei einem Heimtierkäfig, insbesondere
Papageienkäfig, mit einer den Raum oberhalb einer Bodenschale
begrenzenden Käfigkuppel vorzugsweise aus Gitterwerk die Käfigkuppel aus mindestens zwei Segmenten besteht, von denen mindestens
eines standfest mit der Bodenschale verbunden und mindestens eines
mit zumindest dem überwiegenden Teil seiner Länge gegenüber einem
benachbarten standfest gehaltenen Segment verschwenkbar ist.

Es hat sich weiterhin überraschend herausgestellt, daß ein in
solcher Weise ausgebildeter Heimtierkäfig mit beliebigem horizontalem Querschnitt seiner Käfigkuppel ausführbar ist, d.h., daß sich die erfindungsgemäß beabsichtigten vorteilhaften Wirkungen
bei einem Heimtierkäfig mit beliebiger Querschnittskontur seiner
Käfigkuppel erzielen lassen. So kann mit Vorzug die Käfigkuppel
vieleckigen Querschnitt, und zwar dabei bevorzugt quadratischen
oder sechseckigen Querschnitt aufweisen. Andererseits kann die
Käfigkuppel mit Vorteil aber auch mit Kreisquerschnitt ausgeführt werden. Durch diese Unabhängigkeit von irgendwelchen an
Querschnittskonturierungen der Käfigkuppel zu stellenden Anforderungen läßt sich eine nicht unerhebliche Rationalisierung
der Produktion solcher erfindungsgemäßer Heimtierkäfige und
damit einhergehend eine entsprechende Senkung des Gestehungspreises derselben erzielen.

Durch die Verschwenkung des bzw. der verschwenkbaren Segmente(s)
gegenüber dem bzw. den standfest gehaltenen Segment(en) erfindungsgemäßer Ausbildung ist es ohne weiteres möglich, den Käfig
nach der Erfindung erschütterungsfrei so zu öffnen, daß das Tier,
soll ihm der Zutritt zur Außenumgebung dieses Käfigs gewährt
werden, ebensowenig eine kleine Öffnung in der Käfigkuppel zu
passieren braucht, wie beim Rückverbringen desselben ins Käfiginnere. Abgesehen davon, daß der Tierhalter somit jederzeit ungestörten Zutritt und bequemen Zugriff zu seinem Tier hat und
sich damit in direktem Kontakt zu diesem, beispielsweise einem
Papagei, befindet, empfindet das Tier seinerseits diese Art der
Freigabe eines vergrößerten Bewegungsraums durch großflächiges
Öffnen des Käfigs zu seiner Umgebung hin als einen vergleichsweise natürlichen Vorgang, der ihm keinerlei Anlaß zu Aufregungen
bietet, wobei besonders ins Gewicht fällt, daß - wie die Erfahrung gezeigt hat - die Tiere bei einer erfindungsgemäßen Ausführung eines Heimtierkäfigs ohne Zögern bereit sind, wieder in
den Käfigraum zurückzukehren, beispielsweise einen im Käfiginneren etwa angeordneten Sitzbaum od. dgl. ohne Scheu anzufliegen, so daß dann lediglich noch die gegeneinander beweglichen Segmente der Käfigkuppel in Schließstellung zurückverschwenkt zu werden brauchen, was jedoch erfahrungsgemäß gleichfalls bei dem Tier keine unangenehmen Folgen zu zeitigen pflegt.

Der Heimtierkäfig nach der Erfindung trägt somit aufgabengemäß wesentlich dazu bei, die Gewöhnung von Mensch und Tier aneinander ebenso zu erleichtern, wie den von seelischen Spannungen praktisch freien Übergang des Tieres von einer eingesperrten Sphäre in eine Freiheitssituation und umgekehrt, wodurch sich erheblich verbesserte Möglichkeiten insbesondere auch für die Zähmung und/oder Dressur solcher Heimtiere ergeben. Auch für den Zoofachhändler selbst ist dieser erfindungsgemäße Heimtierkäfig eine große Erleichterung, da er die eingangs beschriebenen Nachteile praktisch vollständig vermeidet. Wird beispielsweise ein Papagei verkauft, so ist bei einem Käfig nach der Erfindung es ohne Schwierigkeiten möglich, ihn aus dem Käfig zu holen, um ihn an den Kunden weiterzugeben. Selbst wenn es sich nämlich um ein ängstliches und ausweichbedachtes Tier handeln sollte, wird der Käfig durch Relativverschiebung zweier benachbarter Segmente gegeneinander um einen Spalt geöffnet, worauf nun der Tierhalter mühelos in den Käfig hineinlangen, den Käfig weiter öffnen und den Papagei herausnehmen kann. Die besondere Schonung von Gesundheit und Psyche der Tiere liegt auf der Hand.

In weiterer zweckmäßiger Fortbildung kann gemäß einem bevorzugten Erfindungsgedanken vorgesehen sein, daß die Bodenschale der Außenkontur des Querschnittes der Käfigkuppel etwa entsprechende lichte Abmessungen zwischen ihren hochstehenden Wandungen aufweist und daß die Käfigkuppel mit einem unteren Rand zumindest ihres standfest gehaltenen Segmentes auf dem Boden der Bodenschale aufstehend in diese eingesetzt ist. Auf diese Weise läßt sich häufig mit vergleichsweise einfachen und kostengünstigen Mitteln eine besonders gute Standfestigkeit und innere Steifigkeit des Heimtierkäfigs nach der Erfindung erzielen, welche es gestattet, daß die Käfigkuppel in verhältnismäßig dünnem Material und damit wiederum besonders wirtschaftlich ausgeführt werden kann. Andererseits kann es für bestimmte Ausführungsformen jedoch günstig sein, wenn gemäß einem alternativen Erfindungsgedanken die Bodenschale zumindest im Bereich des oberen Randes ihrer hochstehenden Wandungen der Innenkontur des Querschnittes der Käfigkuppel etwa entsprechende Abmessungen aufweist und die Käfigkuppel mit
einem unteren Rand auf dem oberen Rand der Bodenschalenwandungen
aufsitzend in an sich bekannter Weise an den Bodenschalenwandungen lösbar festgelegt ist. Beide beschriebenen Varianten
benutzen dabei ganz gezielt solche Bodenschalen, deren Querschnittbild der horizontalen Querschnittskontur der Käfigkuppel entspricht. Während bei der zweitgenannten Variante die lösbare
Festlegung der Käfigkuppel gegenüber der Bodenschale unvermeidbar ist, ist eine lösbare Festlegung mittels entsprechend vorzusehender Festlegungselemente bei der erst genannten Variante
entbehrlich. Sollte sie aus irgendwelchen Gründen erwünscht sein,
kann sie jedoch vorgesehen werden. Andererseits kann auch eine
Kombination beider Varianten insoweit getroffen werden, als
beispielsweise das bzw. die standfest gehaltene(n) Segment(e)
im Sinne der erstgenannten Variante in die Bodenschale auf deren
Boden aufstehend eingesetzt wird bzw. werden, während das bzw.
die verschwenkbaren Segment(e) im bodenschalennahen Bereich der
Höhe der dortigen Seitenwandung der Bodenschale entsprechend verkürzt sind und im Sinne der zweitgenannten Variante mit ihrem
unteren Rand lediglich auf dem oberen Rand der zugeordneten
Seitenwandung der Bodenschale aufsitzen.

Andererseits kann es durchaus erwünscht sein, wenn die Bodenschale unabhängig von der Art der horizontalen Querschnittskontur der Käfigkuppel kreisrund ausgebildet ist. Sie kann nach
einem weiteren alternativen Erfindungsgedanken dabei mit einem
dem die Außenkontur des Querschnittes der Käfigkuppel etwa umschreibenden Kreis entsprechenden lichten Durchmesser zwischen
ihren Wandungen ausgebildet sein, wobei die Käfigkuppel mit einem
unteren Rand zumindest ihres standfest gehaltenen Segmentes auf
dem Boden der Bodenschale aufstehend in diese eingesetzt ist.
Eine vorteilhafte weitere Variante gemäß einem anderen alternativen Erfindungsgedanken kennzeichnet sich ferner dadurch, daß
die Bodenschale zumindest im Bereich des oberen Randes ihrer
Wandungen kreisrund und mit einem dem die Innenkontur des Querschnittes der Käfigkuppel etwa umschreibenden Kreis entsprechenden Durchmesser ausgebildet ist und die Käfigkuppel mit einem unteren Rand im Bereich ihrer Vieleckecken auf dem oberen Rand der Bodenschalenwandungen aufsitzend in an sich bekannter Weise an den Bodenschalenwandungen lösbar festgelegt ist. Auch für diese beiden letztgenannten bevorzugten Ausführungsformen der Erfindung gelten die im Zusammenhang mit den beiden vorher erläuterten Ausführungsvarianten beschriebenen Abwandlungsmöglichkeiten.

Nach einer anderen erfinderischen Fortbildung kann bei einem Heimtierkäfig nach der Erfindung die Käfigkuppel durch Kippverschwenkung des verschwenkbaren Segmentes gegenüber dem benachbarten standfest gehaltenen Segment öffenbar sein. Dabei kann gemäß weiterer zweckmäßiger Fortbildung das verschwenkbare Segment am benachbarten standfest gehaltenen Segment um eine vertikale oder aber um eine horizontale Achse verschwenkbar angelenkt sein.

Andererseits ist es aber gemäß einem alternativen Erfindungsgedanken durchaus auch möglich, den Heimtierkäfig nach der Erfindung so auszuführen, daß die Käfigkuppel durch Drehverschwenkung des verschwenkbaren Segmentes gegenüber dem benachbarten standfest gehaltenen Segment öffenbar ist.

Als besonders zweckmäßig hat es sich herausgestellt, wenn dabei das verschwenkbare Segment um eine vertikale Achse drehbar in einem vom benachbarten standfest gehaltenen Segment getragenen Drehlager aufgehängt ist. Dieses kann dabei mit Vorteil einen vom standfest gehaltenen Segment getragenen Lagerstift und einen auf diesem frei drehbaren Ring aufweisen, der das drehverschwenkbare Segment trägt. In weiterer zweckmäßiger Fortbildung kann ferner der Lagerstift in einer Buchse gehalten sein, die von einer im Deckbereich des standfest gehaltenen Segmentes angeordneten Scheibe gehalten ist, wobei der das drehverschwenkbare Segment tragende Ring als auf einem frei aus dieser Buchse herausragenden Ende des Lagerstiftes frei drehverschwenkbare Scheibe ausgebildet ist, an welcher das drehverschwenkbare Segment hängt.

Weiterhin kann mit Vorzug zwischen beiden gegeneinander drehverschwenkbaren Segmenten ein zum Lagerstift konzentrischer
Abstandshaltering angeordnet sein. Dieser kann in weiterer
vorteilhafter Fortbildung an einem der gegeneinander drehverschwenkbaren Segmente festgelegt sein. Andererseits kann
es aber auch zweckmäßig sein, wenn der Abstandshaltering gegenüber beiden gegeneinander drehverschwenkbaren Segmenten drehbeweglich ist.

Weiterhin hat es sich als besonders zweckmäßig erwiesen, wenn
zwischen Abstandshaltering und gegenüber diesem drehverschwenkbarem segmentfestem Bauteil eine Einrichtung zur Verminderung
der Reibung angeordnet ist. Hierdurch wird nämlich die Relativverschwenkung der Segmente zwecks Öffnung der Käfigkuppel so verbessert, daß mit Sicherheit das Wohlbefinden von Mensch und Tier
störende Geräusche und Erschütterungen beim Öffnen der Käfigkuppel ebenso vermieden werden wie die Notwendigkeit größerer
Kraftanstrengungen hierfür. Zweckmäßig kann die Einrichtung zur
Verminderung der Reibung als Kugellager ausgebildet sein. Andererseits hat es sich als in vielen Fällen ausreichend erwiesen,
wenn die Einrichtung zur Verminderung der Reibung als Zwischenlagscheibe aus reibungsarmem Material wie beispielsweise unter
der geschützten Warenbezeichnung Teflon bekanntem Polytetrafluoräthylen, ausgebildet ist.

Während die so beschriebene Ausführung des Drehlagers sowohl
hinsichtlich der Ausbildung seiner Einzelteile und seiner Montage
besonders einfach und mit einfachsten werkzeugmäßigen Hilfsmitteln einer Schlosserei wirtschaftlich zu bewerkstelligen ist,
kann es in anderen Fällen durchaus vorteilhaft sein, wenn gemäß
einer alternativen Ausführungsform das Drehlager als Wälzlager
ausgebildet ist, dessen einer Lagerring mit dem standfest gehaltenen Segment und dessen anderer Lagerring mit dem gegenüber
diesem drehverschwenkbaren Segment verbunden ist. Dabei übernimmt dann dieses Wälzlager gleichzeitig die Funktion der Einrichtung zur Verminderung der Reibung, welche bei der vorher beschriebenen Alternativausführung des Drehlagers als Kugellager
ausgebildet sein konnte, dessen Kugeln zweckmäßig einerseits
auf der mit dem standfeste Segment verbundenen Scheibe und
andererseits auf der mit dem drehverschwenkbaren Segment verbundenen Scheibe laufen.

Ist ein Lagerstift vorhanden, so kann es weiterhin zweckmäßig sein,
wenn das obere Ende desselben aus dem Drehlager herausragt und
als Traggriff oder Aufhängöse ausgebildet ist. Ist ein solcher
Lagerstift nicht vorhanden, so kann, sollte ein solcher Traggriff oder eine solche Aufhängöse erwünscht sein, diese bzw.
dieser am standfest gehaltenen Segment angebracht sein.

Weiterhin kann es insbesondere bei aus verhältnismäßig dünnem
Wandungs- bzw. Gittermaterial erstellten Käfigkuppel-Segmenten
zweckmäßig sein, wenn das drehverschwenkbare Segment auf einem
bodenschalenfesten Stift zusätzlich geführt ist, wodurch ein
Beitrag zur Erhöhung seiner Eigensteifigkeit erbracht werden
kann. Andererseits kann es insbesondere für besonders großvolumige Käfigkuppeln zu bevorzugen sein, wenn gemäß einer anderen
erfinderischen Fortbildung das drehverschwenkbare Segment mittels
eines in seinem unteren Bereich vorzugsweise in der Bodenschale
verdecktliegend angeordneten Stützringes zusätzlich geführt ist,
der auf einem im unteren Bereich des standfest gehaltenen Segmentes
angeordneten Gegenring läuft. Um zu vermeiden, daß durch die
Bewegung der Segmente gegeneinander und die damit einhergehende
Drehverschwenkung von Stützring und Gegenring relativ zueinander
in der Bodenschale befindliche Streu, Exkremente oder Futterreste oder Astteile od. dgl. aufgewirbelt oder aus der Bodenschale
herausgeschleudert werden oder aber die Drehverschwenkung der
Segmente behindert werden könnte, können in weiterer Verbesserung dieser Ausführungsform Stützring und Gegenring mit Abstand
zum Boden der Bodenschale, vorzugsweise etwa in Höhe des
Bodenschalenrandes, angeordnet sein.

Gewöhnlich wird den in einem Heimtierkäfig nach der Erfindung gehaltenen Tieren die Möglichkeit zum Sitzen und/oder
Klettern und/oder Herumspringen gegeben, indem im Käfiginneren
ein herkömmlicher Papageienständer oder ein Sitzbaum oder
aber käfigkuppelwandungsfest gehaltene Sitzstäbe oder Äste
od. dgl. angeordnet werden. Für Verwendung in Verbindung
mit solchen Papageienständern, Sitzbäumen u. dgl. hat sich
eine bevorzugte Ausführungsform der Erfindung als besonders
zweckmäßig erwiesen, bei welcher das standfest gehaltene
Segment das drehverschwenkbare Segment bei dessen Drehverschwenkung übergreifend ausgebildet ist. Sind hingegen käfigkuppelwandungsfest gehaltene Sitzstäbe oder Kletteräste
od. dgl. vorzusehen, so empfiehlt es sich, wenn gemäß einer
alternativen Ausführungsform das drehverschwenkbare Segment
das standfest gehaltene Segment bei Drehverschwenkung übergreifend ausgebildet ist. Diese Ausführungsform gestattet
sogar die Anordnung von das Käfiginnere etwa diametral
überspannenden Sitzstäben od. dgl.. Allerdings kann es
je nach Ausbildung der Bodenschale möglich sein, daß bei
dieser Ausführungsform sich ein Halbringspalt zwischen
Bodenschalenrand und unterem Rand des verschwenkbaren
Segmentes bildet, durch welchen Unratteile in den Bereich außerhalb der Bodenschale gelangen könnten.

Wenn je nach im Käfig zu haltenden Tieren und deren jeweiligen Eigenarten unterschiedliche Einbauten, wie beispielsweise Papageienständer, Sitzstangen oder Sitzbäume,
Tragbrücken für Futternäpfe oder dergleichen, ins Innere
der Käfigkuppel hineinragend an der Bodenschale festgelegt
sind, wird eine freie Schwenkbeweglichkeit des bzw. der
kipp- bzw. drehverschwenkbaren Segmente(s) gegenüber dem
bzw. den standfest gehaltenen Segment(en) ermöglicht, indem
der Verschwenkweg nicht durch Halterungen für diese Einbauten beeinträchtigt wird, und zwar dies ungeachtet dessen,
ob es sich um Ausführungen solcher bekannter Heimtierkäfige
mit Öffenbarkeit der Käfigkuppel über Kippverschwenkungs-
oder aber Drehverschwenkungsbewegung handelt.

Da es jedoch erforderlich ist, von Zeit zu Zeit einen
Heimtierkäfig dieser Art zu reinigen, und dies die Abnahme der Käfigkuppel von der Bodenschale als Einheit
bedingt, wenn der Reinigungsvorgang schnell und rationell
und so vonstatten gehen soll, daß anschließend die Bodenschale sich in hygienisch einwandfreiem Zustand befindet,
ergibt sich die Schwierigkeit, beim Abnehmen der Käfigkuppel von der Bodenschale die im Käfig gehaltenen Tiere,
welche vorzugsweise sich auf ihrem Papageienständer, ihrer
Sitzstange oder ihrem Sitzbaum oder dergleichen aufzuhalten
pflegen, in der abzunehmenden Käfigkuppel zu halten.
Einerseits ist dies nämlich bei bestimmten Tierarten,
wie beispielsweise Äffchen oder dergleichen, überhaupt nicht
möglich, da solche Tiere beim Abnehmen der Käfigkuppel von
der Bodenwanne sofort entweichen würden . Andere Tiere
wiederum,

wie beispielsweise viele Papageienarten, pflegen auf ihrem
Papageienständer oder Sitzbaum oder dergleichen ungerührt
zu verbleiben, wenn die Käfigkuppel abgehoben wird, bedingen dann aber erfahrungsgemäß einen beachtlichen Aufwand, um von ihrem Sitzplatz überhaupt weggebracht werden zu können, damit die Bodenschale für die Reinigung
zugänglich wird. Wieder andere Tierarten müssen durch
Scheuchen ins Innere der abzunehmenden Käfigkuppel verbracht und in dieser gehalten werden, um die Bodenschale
und die von dieser getragenen Einbauten freizubekommen.
In allen Fällen ergibt sich eine tierpsychologisch äußerst
unerwünschte Beunruhigung der Käfiginsassen im Zusammenhang mit jedem Reinigungsvorgang und ist außerdem stets
nicht unbeträchtliches Geschick und in jedem Falle Erfahrung im Umgang mit sowohl dem betreffenden Heimtierkäfig
als auch den jeweils in diesem gehaltenen Tieren erforderlich.

Hier stellt sich nun die Aufgabe, mit einfachen und kostengünstigen Mitteln ohne Beeinträchtigung der Öffnungsbeweglichkeit der Segmente relativ zueinander, sei diese nun
über Kipp- oder aber Drehverschwenkbarkeit erbracht, diesen
beschriebenen Nachteilen so Abhilfe zu schaffen, daß im
Reinigungsfalle die Käfigkuppel in geschlossenem Zustand
als Einheit von der Bodenschale abgenommen werden kann und
dabei automatisch gewährleistet ist, daß die in ihrem
Inneren befindlichen Tiere ohne Beeinträchtigung ihres
derzeitigen Verhaltens unter größtmöglicher tierpsychologischer Schonung automatisch den Abhebvorgang der Käfigkuppel mitmachen und dadurch die Bodenschale für Reinigungszwecke frei zugänglich wird.
Gemäß einem die Erfindung in dieser Richtung zweckmäßig fortbildenden Erfindungsgedanken wird diese Aufgabe in überraschend einfacher und dabei doch höchst wirtschaftlicher Weise dadurch
gelöst, daß bei einem Heimtierkäfig nach der Erfindung

von mindestens einem standfest gehaltenen Segment der Käfigkuppel über eine Radialstrebe, vorzugsweise über einen
mehrstrebigen Stützstern, die bzw. der die Ebene des unteren Randes    mindestens eines in Schließstellung befindlichen verschwenkbaren Segmentes untergreift, ein ins
Innere der Käfigkuppel hineinragender Tragstift getragen
ist, auf dem ein Papageienständer, eine Sitzstange, ein
Sitzbaum, eine Tragbrücke für Futternäpfe oder dergleichen angeordnet ist.

Für die   ---   Ausführungsform eines Heimtierkäfigs
mit mindestens einem gegenüber einem benachbarten standfest gehaltenen Segment um eine vertikale Achse drehverschwenkbaren Segment erbringt die Erfindung erstmalig die
Möglichkeit, die Vorteile der Erfindung besonders einfach
und kostengünstig nutzbar zu machen, wenn gemäß einer erfinderischen Fortbildung die den Tragstift tragende Radialstrebe bzw. der mehrstrebige Stützstern den unteren
Rand mindestens eines drehverschwenkbaren Segmentes in
dessen Schließstellung untergreift. Bei den Ausführungsformen mit Kippverschwenkung des bzw. der gegenüber dem
bzw. den standfest gehaltenen Segment(en) relativbeweglichen Segmente(s)          wird es zwar nur
in seltenen Fällen erforderlich sein, die Radialstrebe
oder den mehrstrebigen Stützstern den unteren Rand mindestens eines öffenbaren Segmentes in dessen Schließstellung untergreifen zu lassen, da meist ausreichend Raum
dafür zur Verfügung stehen dürfte, die Radialstrebe bzw.
den mehrstrebigen Stützstern in einem vom bzw. von den
standfest gehaltenen Segment(en) überdachten Raum so anzuordnen, daß sie bzw. er nicht den von irgendeinem gegenüber diesem Segment bzw. diesen Segmenten öffnungsbeweglichen Segment benötigten Bewegungsweg stört, jedoch ist
es im Rahmen der Erfindung durchaus auch möglich, auch

bei solchen Ausführungsformen die Anordnung der Radialstrebe bzw. des mehrstrebigen Stützsternes so zu treffen, daß der untere Rand mindestens eines öffnungsbeweglichen Segmentes in dessen Schließstellung untergriffen wird.

Gemäß einer weiteren zweckmäßigen Fortbildung der Erfindung kann mit Vorteil der Papageienständer, die
Sitzstange, der Sitzbaum, die Futternapftragbrücke
oder dergleichen am Tragstift durch Verschrauben, Versplinten, Verriegeln oder dergleichen lösbar festgelegt sein. Auf diese Weise kann nämlich ein einmal
vorhandener Heimtierkäfig durch schnellen und bequemen
Austausch eines Einbauteils gegen ein anderes höchst
kostengünstig von der Benutzung für eine andere Tierart auf die Haltung einer anderen umgerüstet werden.
In jedem Falle aber ergibt sich der weitere Vorteil,
daß im übrigen die Bodenschale selbst von Halterungen
für die beschriebenen Einbauten frei und daher der
Reinigungsvorgang derselben wesentlich erleichtert
ist und Ecken, Nischen oder Ausnehmungen, in denen
Schmutzteile verbleiben und die Hygiene des gesamten
Käfigs gefährden könnten, vermieden sind.

Im übrigen hat es sich aus konstruktiven ebenso wie
aus ästhetischen Gründen als zu bevorzugen erwiesen,
wenn gemäß weiterer zweckmäßiger Fortbildung der
Erfindung der Tragstift in der Bodenschale versenkt
angeordnet ist.

Ein anderer Erfindungsgedanke befaßt sich mit der Verbesserung der Erfindung in anderer Richtung. Bei Ausführungen des erfindungsgemäßen Heimtierkäfigs mit einer
Käfigkuppel, die aus mindestens zwei Segmenten besteht,
von denen mindestens eines standfest mit der Bodenschale
verbunden und mindestens eines mit zumindest dem überwiegenden Teil seiner Länge gegenüber einem benachbarten
standfest gehaltenen Segment um eine vertikale Achse
drehverschwenkbar ist, ist nämlich das einzige vorhandene schwenkbare Segment oder sind im Falle mehrerer
solcher schwenkbaren Segmente diese alle um eine vertikale Achse drehbar in einem vom benachbarten standfest
gehaltenen Segment getragenen Drehlager aufgehängt,
während die unteren Segmentbereiche eine freie und relativ zueinander ungeführte Drehbewegung durchmachen können,
wobei im Interesse einer möglichst sauberen Führung der gegeneinander drehverschwenkbaren Segmente eine zusätzliche
Führung im unteren Bereich des bzw. der drehverschwenkbaren Segmente(s) mittels eines Stützringes vorgesehen
sein kann, der auf einem im unteren Bereich des standfest gehaltenen Segmentes angeordneten Gegenring läuft.

Hier hat es sich als nachteilig erwiesen, daß es bei
diesen Ausführungen von Heimtierkäfigen mit oder ohne
zusätzliche Führung der gegeneinander drehverschwenkbaren Segmente mittels Stützring und Gegenring in der
Praxis unvermeidbar zu einem Schleifen und Reiben meist
sogar recht großflächiger Bereiche der relativ zueinander drehverschwenkbaren Segmente aneinander kommt,
wenn diese gegeneinander bewegt werden. Hierdurch wird
nicht nur ein nicht unbeträchtlicher Kraftaufwand für
die Bewegungsbetätigung des bzw. der Segmente(s) erforderlich, sondern es ergibt sich auch eine nicht unbeträchtliche Lärmentwicklung. Beides führt erfahrungsgemäß nicht nur zu psychologischen Hemmungen gegenüber
solchen Öffnungsbewegungen beim Benutzer, sondern auch
zu unerwünschten Belästigungen der in einem solchen Heimtierkäfig gehaltenen Tiere, welche gerade bei besonders
empfindlichen Tieren, wie beispielsweise Graupapageien,
zu empfindlichen Verhaltensstörungen führen können.

Versuche, die Ursache für diese Nachteile zu beseitigen,
indem man einerseits die Segmente durch stärkere Dimensionierung ihres Materials in sich biege- und verwindungssteifer ausgebildet hat, haben gezeigt, daß auch hierdurch sich praktisch keine wesentliche Verbesserung im
Hinblick auf die Ausschaltung der beschriebenen Nachteile erreichen läßt, indem nämlich die relativ zueinander drehverschwenkbaren Segmente ihren Freiheitsgrad
für Schaukelbewegungen gegeneinander im Zuge ihrer

Drehverschwenkungsbewegung relativ zueinander beibehalten. Hinzu kommt, daß solche Ausführungen ein erheblich gesteigertes Gewicht zu besitzen und daher
vergleichsweise recht unhandlich zu sein pflegen, ganz
abgesehen davon, daß durch den recht beachtlichen Materialaufwand notgedrungen auch der Gestehungspreis
der Heimtierkäfige ungünstig beeinflußt wird.

Auch der Versuch, das Hängelager mit vergrößerter Bewegungsbahn auszugestalten, um so den Freiheitsgrad
für Schaukel- und Taumelbewegungen des bzw. der drehverschwenkbaren Segmente(s) zumindest weitgehend einzuschränken, wenn nicht gar auszuschalten, hat lediglich
das Ergebnis erbracht, daß diese im übrigen recht aufwendige und teure Maßnahme praktisch keinen Erfolg zeitigt, und zwar dies selbst dann nicht, wenn diese Maßnahme
in Kombination mit der Führung der gegeneinander drehverschwenkbaren Segmente in deren unteren Bereichen über
Stützring und Gegenring und/oder besonders schwerer und
biege- und verwindungssteifer Segmentausbildung kombiniert
wird. Da hier die Ursache nicht beseitigt werden konnte, wurde
auch versucht, die unerwünschten Symptome derselben auszuschalten, indem bei einer Ausführung mit Stütz- und Gegenring diese beiden Ringe mit reibungsverminderndem Material
überzogen wurden. Auch hier war jedoch das Ergebnis enttäuschend, denn bei recht beachtlichem Kostenmehraufwand
ergab sich nur eine kaum befriedigende Verringerung der
Geräuschentwicklung bei Bewegung der Segmente relativ
zueinander und praktisch keine wesentliche Verringerung
des für die Segmentbewegung erforderlichen Kraftaufwandes,
so daß in jedem Fall die mit der Segmentbewegung einhergehenden Erschütterungen der gesamten Käfigkuppel zu unerwünschten Belästigungen der Käfiginsassen mit deren
schädlichen Folgeerscheinungen führen.

Auch der erfindungsgemäß bereits vorgeschlagene Weg einer
Definierung der vertikalen Drehachse der gegeneinander
drehverschwenkbaren Segmente über zwei voneinander unabhängige Lager derart, daß das drehverschwenkbare Segment
auf einem bodenschalenfesten Stift zusätzlich geführt
wird, ist nicht einmal bei extrem schwerer Segmentausführung, welche naturgemäß die eingangs bereits beschriebenen Nachteile bezüglich Handhabung und Transport und Lagerung sowie insbesondere auch Preisgestaltung mit sich
bringt, in der Praxis unter allen Bedingungen geeignet, die
unerwünschten Berührungskontakte der gegeneinander drehverschwenkbaren Segmente aneinander zuverlässig zu vermeiden.

Demgemäß stellt sich nun die zusätzliche Aufgabe, mit einfachen und kostengünstigen Mitteln einen Heimtierkäfig nach
der Erfindung mit einer Käfigkuppel, die aus mindestens
zwei Segmenten besteht, von denen mindestens eines standfest mit der Bodenschale verbunden und mindestens eines mit
zumindest dem überwiegenden Teil seiner Länge gegenüber
einem benachbarten standfest gehaltenen Segment um eine
vertikale Achse drehverschwenkbar ist, so zu vervollkommnen,
daß unter Beibehaltung seiner Vorteile gegenüber Ausführungen
nach dem Stande der Technik seine vorstehend als in der
Praxis verbesserungswürdig dargestellten Eigenschaften durch
zuverlässige Vermeidung von Berührungskontakt zwischen gegeneinander drehverschwenkbaren Segmenten sogar bei besonders
leichter und damit auch biege- und verwindungsgefährdeter
Segmentausführung so verbessert werden, daß selbst bei
Lagerung und Transport der Einzelteile eines solchen Heimtierkäfigs unter schlechtesten Bedingungen ein praktisch
erschütterungs- und geräuschfreier Lauf der gegeneinander
drehverschwenkbaren Segmente relativ zueinander gewährleistet ist und sich ein solcher Heimtierkäfig speziell
für die Haltung scheuer, empfindlicher und tierpsychologisch gefährdeter Tiere empfiehlt.

Dies wird gemäß dem die Erfindung in dieser Richtung zweckgemäß fortbildenden weiteren Erfindungsgedanken in überraschend einfacher und kostengünstiger Weise dadurch erreicht,
daß ein den bisherigen Lösungsversuchen der Fachwelt zuwiderlaufender Weg eingeschlagen wird, indem bei einem Heimtierkäfig der spezifischen beschriebenen Ausgestaltung die Drehachse durch zwei von einander unabhängige, von mindestens
einem standfest mit der Bodenschale verbundenen Segment der
Käfigkuppel getragene Radiallager definiert ist, gegenüber
dessen mit diesem standfesten Segment verbundenem Lagerteil
sich jeweils ein jeweils mit mindestens einem drehverschwenkbaren Segment verbundenes Lagerteil drehverschwenkbar abstützt.

Während - wie vorstehend bereits beschrieben - der Versuch
der Verwendung einer durch zwei von einander unabhängige
Lager, von denen eines durch einen bodenschalenfesten Stift
gebildet ist, definierten Drechachse für die gegeneinander
drehverschwenkbaren Segmente sich als untauglich erwiesen
hat, ergibt sich, überraschenderweise  allein durch die
erfindungsgemäße Maßnahme, beide die Drehachse definierenden
Radiallager dadurch gegenüber dem bzw. den standfest mit
der Bodenschale verbundenen Segment(e) sicher festzulegen,
daß sie beide gleichzeitig von diesem bzw. diesen getragen
werden, eine solche starre Zuordnung der Segmentbereiche
zueinander, daß jegliche schädlichen Schaukel- bzw. Taumelbewegungen bei Drehverschwenkungsbewegung der Segmentteile
bzw. -bereiche gegeneinander zuverlässig ausgeschaltet ist,
und zwar dies sogar bei Verwendung besonders dünnen und/
oder besonders biegeweichen Drahtmaterials für die Segmente
der Käfigkuppel, wobei sich als besonders überraschend
herausgestellt hat, daß selbst durch Lagerung und/oder
Transport hervorgerufene Verformungen der einzelnen gegeneinander drehverschwenkbaren Segmente, sofern diese nicht
allzu groß sind, überhaupt keinen unerwünschten Einfluß
auf die Leichtgängigkeit und Geräuscharmut der Drehverschwenkungsbewegung der Segmente gegeneinander haben, da sich von vornherein, die Käfigkuppel so konzipieren läßt, daß der lichte Abstand zwischen jeweils standfest gehaltenem und gegenüber diesem drehverschwenkbaren Segment so groß gehalten werden kann, daß er sogar das Maß der Maschenweite der Segmente übertrifft, wodurch ohne Beeinträchtigung der Umfriedungswirkung der Käfigkuppel für den Aufenthaltsraum der Käfiginsassen in deren Innerem ausreichend Freiraum für leichtere Deformierungen der Segmente bereitgestellt werden kann, so daß auch aus diesem Gesichtspunkt eine nachteilige Wirkungen von Lagerungs- und Transportschäden automatisch eliminierende Ausgestaltung eines Heimtierkäfigs nach der Erfindung möglich ist. Dabei ist nicht zu übersehen, daß die Erfindung nunmehr die Möglichkeit bietet, neben besonders leichter und damit preiswerter und handhabungsgünstiger Ausführung der Segmente der Käfigkuppel auch die die Drehverschwenkungsachse definierenden Lagerungen der gegeneinander drehverschwenkbaren Segmente aneinander extrem kostengünstig ausgestalten zu können.

Eine erfinderische Fortbildung kennzeichnet sich dadurch, daß das mit dem drehverschwenkbaren Segment verbundene, drehverschwenkbare Lagerteil ein Lagerstift ist, der in einer das standfest gehaltene Lagerteil bildenden Lagerbuchse geführt ist, die von mindestens einem standfest mit der Bodenschale verbundenen Segment der Käfigkuppel getragen ist. Andererseits ist aber mit Vorteil auch eine Alternativkonstruktion möglich, gemäß welcher das mit dem drehverschwenkbaren Segment verbundene, drehverschwenkbare Lagerteil eine Lagerbuchse ist, die auf einem das standfeste Lagerteil bildenden Lagerstift läuft, der von mindestens einem standfest mit der Bodenschale verbundenen Segment der Käfigkuppel getragen ist.

Die Erfindung eignet sich sogar für die Verbesserung vorhandener Heimtierkäfige bekannter Ausführung im Wege der Nachrüstung,
wenn gemäß einem anderen untergeordneten Erfindungsgedanken
das obere Radiallager in an sich bekannter Weise als Axialkräfte aufnehmendes Hängelager ausgebildet ist, während das
untere Radiallager als reines Radiallager mit axialem Bewegungsspiel ausgebildet ist, dessen eines Lagerteil, nämlich Lagerbuchse oder Lagerstift, mit mindestens einem standfest gehaltenen Segment und dessen anderes Lagerteil, nämlich
Lagerstift oder Lagerbuchse, mit mindestens einem drehverschwenkbaren Segment der Käfigkuppel verbunden ist. Die Verwirklichung dieser erfinderischen Fortbildung der grundlegenden Konzeption der Erfindung benötigt nämlich lediglich
die im übrigen höchst einfach, schnell und bequem und dabei
mit geringsten Kosten mögliche Anordnung eines von einem
oder mehreren standfesten Segment(en) getragenen unteren Radiallagers.

Andererseits hat sich aber eine erfinderische Alternativlösung hierzu     besonders bewährt, gemäß welcher das untere
Radiallager als Axialkräfte aufnehmendes Stehlager ausgebildet ist, während das obere Radiallager als reines Radiallager mit axialem Bewegungsspiel ausgebildet ist, dessen
eines Lagerteil, nämlich Lagerbuchse oder Lagerstift, mit
mindestens einem standfest gehaltenen Segment und dessen
anderes Lagerteil, nämlich Lagerstift oder Lagerbuchse, mit
mindestens einem drehverschwenkbaren Segment der Käfigkuppel
verbunden ist. Diese Konstruktion bringt nämlich Vorteile
bezüglich der Aufnahme der gewichtsmäßigen Belastungen der
Segmente der Käfigkuppel mit sich, indem einerseits das
bzw. die standfest gehaltene(n) Segment(e) von es bzw. sie
auf Stauchung belastenden Zugwirkungen durch das an einem
oberen Hänge-

lager hängende Gewicht des bzw. der drehverschwenkbaren Segmente(s) entlastet und andererseits das die gewichtsmäßige Abstützung des bzw. der drehverschwenkbaren Segmente(s) bewirkende Lager in kinematisch günstigster Position, nämlich dem unteren Bereich des gewichtsmäßig abzustützenden Gebildes, angeordnet ist, so daß gleichzeitig auch eine positive Gewichtsverteilungs- und Belastungswirkung auf die Konstruktion des bzw. der drehverschwenkbaren Segmente(s) erreicht ist, da die durch gewichtsmäßige Belastung bedingten Verformungen eines schalenförmigen Gitterkörpers dann erheblich geringer sind, wenn dessen Gewicht auf einem ihn von unten abstützenden Körper mit Druckwirkung lastet und daher in sich tragend abzustützen ist, als wenn dieses Gewicht einen solchen Gitterkörper auf Zug belastet, wenn dieser etwa in seinem Apex aufgehängt ist. Es bietet also diese erfinderische Ausführung die vorteilhafte Möglichkeit nicht nur für raumsparende und preisgünstige Ausgestaltung der Lagerung selbst, sondern auch für gewichtsmäßig extrem leichte und damit einhergehend besonders kostengünstige Ausführung der Segmente der Käfigkuppel, was sich insgesamt positiv auf den Gestehungspreis eines Heimtierkäfigs nach der Erfindung auswirkt.

Weiterhin hat es sich als zweckmäßig erwiesen, wenn gemäß einem anderen untergeordneten Erfindungsgedanken das standfest gehaltene Lagerteil des unteren Radiallagers in der Bodenschale versenkt und vorzugsweise mit seinem bodenschalenseitigen Ende nahe deren Boden angeordnet ist und eine ausreichende axiale Länge aufweist, um das drehverschwenkbare Lagerteil in Abstand vom Boden der Bodenschale geführt zu halten. Auf diese Weise wird nämlich durch einfache geometrische Dimensionierung und Positionierung bewirkt, daß ohne weitere Hilfsmittel automatisch das untere Radiallager von Verunreinigungen durch in der Bodenschale
befindliche Streu, Sand, Futterreste, Exkremente, Federn,
Haare oder dergleichen freigehalten und gleichzeitig eine
gute Drehbeweglichkeit zuverlässig gewährleistet wird.

Eine weitere zweckmäßige Ausgestaltung der Erfindung sieht
vor, daß von mindestens einem standfest gehaltenen Segment
der Käfigkuppel ein deren Kontur etwa folgender Tragring
getragen ist, der über mindestens eine Radialstrebe, vorzugsweise über einen mehrstrebigen Stützstern das standfest gehaltene Lagerteil des unteren Radiallagers abstützt,
und daß von mindestens einem drehverschwenkbaren Segment
der Käfigkuppel ein deren Kontur gleichfalls etwa folgender
weiterer Tragring getragen ist, der über mindestens eine
Radialstrebe, vorzugsweise über einen mehrstrebigen Stützstern das drehverschwenkbare Lagerteil des unteren Radiallagers abstützt. Für den bevorzugten Sonderfall eines
Heimtierkäfigs, bei dem das standfest gehaltene Lagerteil
des unteren Radiallagers in der Bodenschale versenkt und
das drehverschwenkbare Lagerteil in Abstand vom Boden der
Bodenschale geführt gehalten ist, hat es sich als zu bevorzugen erwiesen, wenn der von mindestens einem standfest
gehaltenen Segment getragene Tragring als Standring ausgebildet ist, mit dem sich der bodenschalenfest gehaltene
Teil der Käfigkuppel gegenüber der Bodenschale abstützt,
wobei der von mindestens einem drehverschwenkbaren Segment
der Käfigkuppel getragene Tragring mit einem Vielfachen
der axialen Abmessung des sich als Standring gegenüber
der Bodenschale abstützenden anderen Tragringes entsprechendem
Abstand zum Boden der Bodenschale angeordnet ist. Diese
Art der Abstützung der unteren Lager über Tragringe und
Radialstreben bzw. Stützsterne erbringt eine besonders im
unteren Bereich der Käfigkuppelsegmente erwünschte Aussteifung derselben, durch welche trotz der Möglichkeit, diese Aussteifung gewichtsmäßig besonders wenig aufwendig
gestalten zu können, weitere Materialreduzierungen im
Bereich der die Käfigkuppelsegmente bildenden Gitterkörper
bzw. Schalenteile möglich ist.

Weiterhin hat es sich als im Interesse der erfindungsgemäß
angestrebten Verringerung von sowohl benötigtem Kraftaufwand für die Drehverschwenkungsbewegung als auch bei
dieser auftretender unangenehmer Geräuschentwicklung besonders zweckmäßig erwiesen, wenn gemäß weiterer vorteilhafter Fortbildung der Erfindung zwischen standfest gehaltenem und drehverschwenkbarem Teil der Radiallager
jeweils eine Laufhülse aus reibungsverminderndem Material,
vorzugsweise aus Trockenlaufeigenschaften aufweisendem
Material, wie beispielsweise Tetrafluoräthylen (Teflon),
angeordnet ist. Solche Laufhülsen sind auch in diesem
Material kostengünstig als Normteile auf dem Markt verfügbar und daher zu bevorzugende konstruktive Bauteile
mit schmierungsfreien Trockenlaufeigenschaften, welche
preisgünstige Konstruktionen mit bei Heimtierkäfigen
praktisch unendlicher Standzeit der Drehverschwenkungslagerungen ermöglichen.

Eine besonders zu bevorzugende Konstruktion ergibt sich
bei einem Heimtierkäfig mit mit mindestens einem drehverschwenkbaren Segment verbundenem Lagerstift des Axialkräfte aufnehmenden, vorzugsweise des unteren Radiallagers,
der in einer standfest gehaltenen Lagerbuchse läuft, dadurch,
daß der Lagerstift einen Bund aufweist, mit dem er sich
auf einer nach oben weisenden Stirnfläche der standfest
gehaltenen Lagerbuchse für Drehbewegung abstützt.

Bei einer Ausführung eines Heimtierkäfigs mit mit mindestens
einem drehverschwenkbaren Segment verbundener Lagerbuchse des Axialkräfte aufnehmenden, vorzugsweise des unteren
Radiallagers, die auf einem standfest gehaltenen Lagerstift läuft, kann gemäß einer Alternativlösung zweckmäßig vorgesehen sein, daß der Lagerstift einen Bund
aufweist, gegenüber dem sich eine Stirnfläche der drehverschwenkbaren Lagerbuchse für Drehbewegung abstützt.

Auf diese Weise lassen sich in beiden Fällen höchst einfach und kostengünstig zuverlässig arbeitende Axialkräfte
aufnehmende Radiallager geringen Gewichtes erstellen.
Dabei kann in weiterer zweckmäßiger Fortbildung auch hier
für besondere Laufgüte mit extremer Geräuscharmut und
guter Leichtgängigkeit dadurch gesorgt sein, daß zwischen
den sich aufeinander abstützenden Stirnflächen von Lagerstiftbund und Lagerbuchse eine Scheibe aus reibungsverminderndem Material, vorzugsweise aus Trockenlaufeigenschaften aufweisendem Material, wie beispielsweise Tetrafluoräthylen, angeordnet ist. Andererseits kann aber mit
Vorzug auch vorgesehen sein, daß zwischen standfest gehaltenem und drehverschwenkbarem Teil des Axialkräfte aufnehmenden Radiallagers eine Laufhülse angeordnet ist, die
ihrerseits aus reibungsverminderndem Material, vorzugsweise aus Trockenlaufeigenschaften aufweisendem Material,
wie beispielsweise Tetrafluoräthylen, gebildet ist und
einen nach außen wegstehenden Radialkragen aufweist, mit
dem sie die der freien Stirnfläche des Lagerstiftbundes
zugewandte Stirnfläche der Lagerbuchse übergat. Und
schließlich ist  es durchaus möglich, die ganze Lagerbuchse aus solchem reibungsverändernem Material, vorzugsweise aus Trockenlaufeigenschaften aufweisendem Material,
wie beispielsweise Tetrafluoräthylen, zu bilden und an
einer solchen Lagerbuchse die Radialstrebe bzw. den Tragstern festzulegen, über welche bzw. welchen dieses eine
solche Lagerbuchse aufweisende Radiallager gegenüber dem
zugeordneten Segment der Käfigkuppel, sei dieses nun ein standfest gehaltenes oder ein drehverschwenkbares Segment,
abgestützt ist.

Auch bei Heimtierkäfigen dieser Ausführung kann sich natürlich der bereits beschriebene Nachteil ungünstig bemerkbar
machen, daß zwar durch sich je nach im Käfig zu haltenden
Tieren und deren jeweiligen Eigenarten im Innern der Käfigkuppel etwa befindende unterschiedliche Einbauten, wie beispielsweise Papageienständer, Sitzstangen oder Sitzbäume,
Tragbrücken für Futternäpfe oder dergleichen, die meist an der
Bodenschale derselben festgelegt sind, eine freie Drehverschwenkbarkeit des bzw. der drehverschwenkbaren Segmente(s)
gegenüber dem bzw. den standfest gehaltenen Segment(en) ermöglicht wird, indem der Verschwenkweg nicht durch Halterungen
für diese Einbauten beeinträchtigt wird, daß sich aber, da
es erforderlich ist, von Zeit zu Zeit einen Heimtierkäfig
dieser Art zu reinigen und dies die Abnahme der Käfigkuppel
von der Bodenschale als Einheit bedingt, wenn der Reinigungsvorgang schnell und rationell und so vonstatten gehen soll,
daß anschließend die Bodenschale sich in hygienisch einwandfreiem Zustand befindet, die Schwierigkeit ergibt, beim
Abnehmen der Käfigkuppel von der Bodenschale die im Käfig
gehaltenen Tiere, welche vorzugsweise sich auf ihrem Papageienständer, ihrer Sitzstange oder ihrem Sitzbaum oder
dergleichen aufzuhalten pflegen, in der abzunehmenden
Käfigkuppel zu halten, wobei auch hier zu berücksichtigen ist,
daß einerseits dies nämlich bei bestimmten Tierarten, wie
beispielsweise Äffchen oder dergleichen, überhaupt nicht
möglich ist, da solche Tiere beim Abnehmen der Käfigkuppel
von der Bodenwanne sofort entweichen würden, andererseits
andere Tiere, wie beispielsweise viele Papageienarten,
auf ihrem Papageienständer oder Sitzbaum oder dergleichen
ungerührt zu verbleiben pflegen, wenn die Käfigkuppel ab-

gehoben wird, dann aber erfahrungsgemäß einen beachtlichen
Aufwand bedingen, um von ihrem Sitzplatz überhaupt weggebracht werden zu können, damit die Bodenschale für die
Reinigung zugänglich wird, und schließlich wieder andere
Tierarten durch Scheuchen ins Innere der abzunehmenden
Käfigkuppel verbracht und in dieser gehalten werden müssen, um
die Bodenschale und die von dieser getragenen Einbauten freizubekommen, wodurch in allen Fällen sich - wie bereits beschrieben - eine tierpsychologisch äußerst unerwünschte Beunruhigung der Käfiginsassen im Zusammenhang mit jedem Reinigungsvorgang ergibt und außerdem stets nicht unbeträchtliches Geschick und in jedem Falle Erfahrung im Umgang
mit sowohl dem betreffenden Heimtierkäfig als auch den
jeweils in diesem gehaltenen Tieren erforderlich ist.

Hier stellt sich also gleichermaßen die zusätzliche Aufgabe,
mit einfachen und kostengünstigen Mitteln ohne Beeinträchtigung der Drehverschwenkbarkeit der Segmente relativ zueinander diesen beschriebenen Nachteilen so Abhilfe zu schaffen,
daß im Reinigungsfalle die Käfigkuppel in geschlossenem
Zustand als Einheit von der Bodenschale abgenommen werden
kann und dabei automatisch gewährleistet ist, daß die in
ihrem Inneren befindlichen Tiere ohne Beeinträchtigung
ihres derzeitigen Verhaltens unter größtmöglicher tierpsychologischer Schonung automatisch den Abhebvorgang der Käfigkuppel mitmachen und dadurch die Bodenschale für Reinigungszwecke frei zugänglich wird.

Zur Lösung dieser Aufgabe schafft die Erfindung erstmalig
die Voraussetzung, indem die beschriebene Ausführungsform
derselben eine mit mindestens einem drehverschwenkbaren
Segment verbundene Lagerbuchse des unteren Radiallagers
aufweist, die auf einem standfest gehaltenen Lagerstift
läuft. Für diese spezifische Ausführungsform eines Heimtierkäfigs nach der Erfindung wird die beschriebene zusätzliche Aufgabe in überraschend einfacher Weise gemäß
einer erfinderischen Fortbildung dadurch gelöst, daß das
freie Ende des Lagerstiftes durch die drehverschwenkbare
Lagerbuchse hindurchgreifend ins Innere der Käfigkuppel
ragt und daß auf ihm ein Papageienständer, eine Sitzstange,
ein Sitzbaum, eine Tragbrücke für Futternäpfe oder dergleichen angeordnet ist. In weiterer zweckmäßiger Ausgestaltung dieses untergeordneten Erfindungsgedankens kann
mit Vorteil der Papageienständer, die Sitzstange, der
Sitzbaum, die Futternapftragbrücke oder dergleichen am
freien, ins Innere der Käfigkuppel hineinragenden Ende
des Lagerstiftes durch Verschrauben, Versplinten, Verriegeln oder dergleichen lösbar festgelegt sein. Auf diese
Weise kann nämlich ein einmal vorhandener Heimtierkäfig
durch schnellen und bequemen Austausch eines Einbauteils
gegen ein anderes höchst kostengünstig von der Benutzung
für eine Tierart auf die Haltung einer anderen umgerüstet
werden. In jedem Falle aber ergibt sich der weitere Vorteil, daß im übrigen die Bodenschale selbst von Halterungen
für die beschriebenen Einbauten frei und daher der Reinigungsvorgang derselben wesentlich erleichtert ist und
Ecken, Nischen und Ausnehmungen, in denen Schmutzteile
verbleiben und die Hygiene des gesamten Käfigs gefährden
könnten, vermieden sind.

Weiterhin kann zweckmäßig die Bodenschale auf einem an sich
bekannten Standfuß angeordnet sein, um dem gesamten Heimtierkäfig eine bequemere Zugänglichkeit sowohl von außen
her als auch seines Inneren zu geben und tunlichst gleichzeitig
auch seine Standfestigkeit zu verbessern und ihm eine besonders
gefällige äußere Erscheinungsform zu vermitteln. Weiterhin
können Bereiche der Käfigkuppel in der Größe eines Segmentes
entsprechendem oder größerem oder kleinerem Ausmaß in durchsichtigem oder durchscheinendem oder aber auch undurchsichtigem
Material ausgebildet sein, so daß die Käfigkuppel, statt
vollständig aus Gitterwerk gebildet zu sein, nur noch teilweise
bzw. segmentweise aus Vollwandungsmaterial gebildet ist.

- 33 -

Und schließlich wird auch eine weitere Aufgabe durch eine
Fortbildung gemäß einem anderen untergeordneten Erfindungsgedanken zusätzlich gelöst, die darin besteht, mit einfachen
und wirtschaftlichen Mitteln eine Möglichkeit zu schaffen,
nicht nur den Transport und die Lagerung von Heimtierkäfigen
nach der Erfindung im Interesse der angestrebten Möglichkeit,
die Käfigkuppel in möglichst leichter Bauweise ausführen zu
können, so zu sichern, daß zuverlässig jegliche Gefahr für
Deformierungen der die

Käfigkuppel bildenden Schalenteile ausgeschaltet ist, wodurch einerseits die vorstehend bereits geschilderten Vorteile bezüglich des Gestehungspreises etc. weiterhin wesentlich gefördert werden, sondern auch einen in der Fachwelt bisher nicht für möglich gehaltenen Weg zu eröffnen,
auf vorgegebenem Transport- und Lagerraum die Transport-
und Lagerkapazität wesentlich zu steigern. Dies wird gemäß diesem untergeordneten Erfindungsgedanken in überraschender Weise dadurch erreicht, daß der Heimtierkäfig
nach der Erfindung in fertigmontiertem und geöffnetem
Zustand eine Hälfte einer gegenüber Beschädigungen und/
oder Deformierungen gefahrenfrei versendbaren Transporteinheit bildet, deren andere Hälfte durch einen gleichartigen, gleichfalls fertigmontierten und geöffneten Heimtierkäfig gebildet ist, der seitenverkehrt mit seiner Käfiginnenraumöffnung der Käfiginnenraumöffnung des anderen Heimtierkäfigs zugewandt gegen diesen gestülpt ist. Es ist ersichtlich, daß hierdurch nicht nur praktisch eine Halbierung
des für einen Heimtierkäfig erforderlichen Transport- und
Lagerraums, sondern auch eine gegenseitige Aussteifung der
gegeneinander gestülpten fertigmontierten und geöffneten
und dadurch Deformierungsbelastungen von außen her praktisch doppelwandigen Widerstand entgegensetzenden Heimtierkäfige erbracht wird. Auch hierdurch wird unterstützend
zur Lösung der eingangs beschriebenen Aufgabe gesteigerter
Funktionstüchtigkeit eines jeden Heimtierkäfigs bei gleichzeitiger Kostensenkung beachtlich beigetragen.

- 34 -

Im folgenden wird die Erfindung an Hand einiger bevorzugter
Ausführungsbeispiele, die in den Zeichnungen lediglich schematisch
dargestellt sind, rein beispielsweise näher erläutert. Dabei
zeigen:

Fig. 1 in perspektivischer Darstellung eine Ausführungsform der
        Erfindung mit zwei relativ zu einem standfest gehaltenen
        Segment der Käfigkuppel verschwenkbaren Segmenten,

Fig. 2 in der Darstellung gemäß Fig. 1 entsprechender Darstellung
        ein anderes Ausführungsbeispiel der Erfindung mit einer
        in zwei Segmente aufgeteilten Käfigkuppel, von denen das
        eine gegenüber dem anderen, standfest gehaltenen Segment
        verschwenkbar ist,

Fig. 3 in perspektivischer Darstellung ein weiteres Ausführungsbeispiel der Erfindung, bei welchem die Relativverschwenkung der die Käfigkuppel bildenden Segmente um eine vertikale Achse erfolgt,

Fig. 4 in einem Vertikalschnitt bei vergrößertem Maßstab die Ausführung des Drehlagers des Ausführungsbeispiels gemäß Fig.3,

Fig. 5 in einer schematischen Draufsicht drei Möglichkeiten für die
        Aufteilung einer Käfigkuppel mit sechseckiger horizontaler
        Querschnittskontur in unterschiedliche gegeneinander verschwenkbare Segmente,

Fig. 6 in der Darstellung gemäß Fig. 5 das dem Ausführungsbeispiel
        gemäß Fig. 1 entsprechende Aufteilungsschema.

Fig. 7 in perspektivischer Darstellung ohne Bodenschale
den unteren Bereich der Käfigkuppel eines Ausführungsbeispiels der Erfindung mit zwei von einander unabhängigen standfest gehaltenen Radiallagern,

Fig. 8 in vergrößertem Maßstab einen Vertikalschnitt durch ein
Ausführungsbeispiel einer Lagerungsanordnung für
standfest gehaltene und drehverschwenkbare Segmente
mit oberem und unterem Radiallager,

Fig. 9 in der Darstellung gemäß Fig.8 entsprechender Darstellung
ein anderes Ausführungsbeispiel einer Lagerungsanordnung
gleichfalls mit oberem und unterem Radiallager,

Fig.10 in der Darstellung gemäß Fig.8 und 9 entsprechender
Darstellung ein weiteres Ausführungsbeispiel einer
Lagerung, und zwar eines oberen Radiallagers, welches
zur Aufnahme von Axialkräften ausgebildet ist, und

Fig.11 in der Darstellung gemäß Fig.10 entsprechender Darstellung ein anderes Ausführungsbeispiel einer Lagerung, und zwar eines unteren Radiallagers, welches
zur Aufnahme von Axialkräften ausgebildet ist.

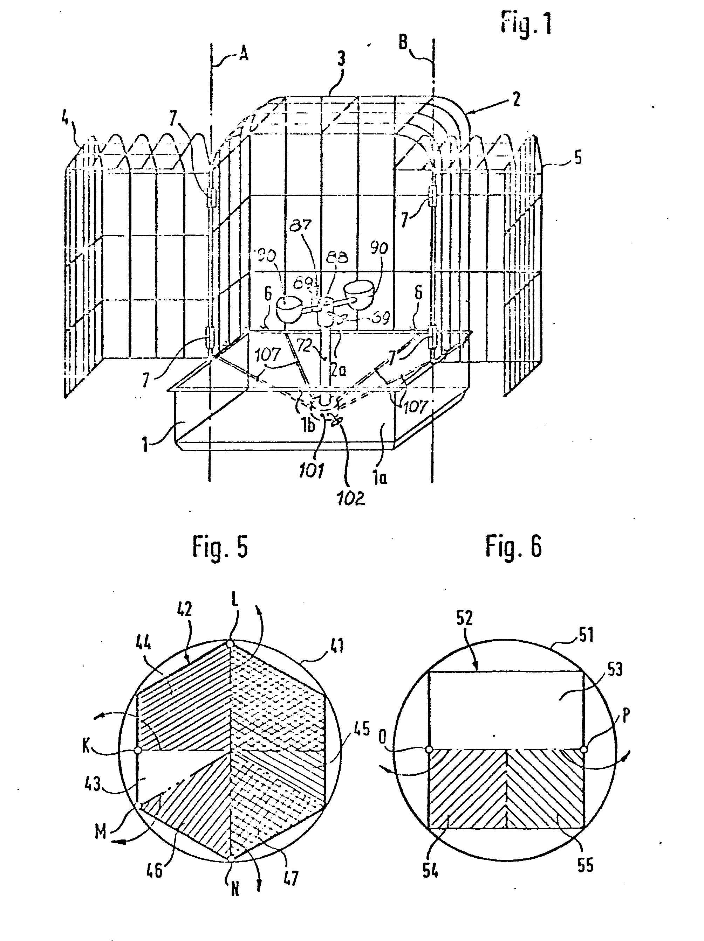

Bei dem in Fig.1 dargestellten Heimtierkäfig nach der Erfindung ist die Bodenschale mit 1 bezeichnet. Sie weist
am oberen Rand

ihrer Seitenwandungen 1a einen diesen oberen Rand verbreiternden
Randflansch 1b auf. Auf diesem ruht der untere Randsteg 2a, der
als Ganzes mit 2 bezeichneten Käfigkuppel. Die Bodenschale 1
ist mit quadratischem horizontalem Querschnitt ausgeführt. Entsprechend weist auch die Käfigkuppel 2 horizontalen Querschnitt
auf.

Die Käfigkuppel 2 ist, wie in Fig. 1 dargestellt, in drei Segmente
3, 4 und 5 aufgeteilt, von denen das Segment 3 als Halbteil der
Käfigkuppel 2 ausgebildet ist, während die Segmente 4 und 5 jeweils als Viertelteile der Käfigkuppel 2 ausgebildet sind und
im Schließzustand das das Segment 3 zur Käfigkuppel 3 ergänzende
weitere Halbteil bilden. Beim in Fig. 1 dargestellten Ausführungsbeispiel der Erfindung sind sämtliche Segmente in Gitterwerk aus
beispielsweise Drahtmaterial ausgeführt. An den freien vertikalen
Seitenkanten des Segmentes 3 sind mittels Scharnieren 7 entsprechende freie Seitenstreben der Segmente 4 und 5 so angelenkt,
daß diese Segmente 4 und 5 jeweils um vertikale Achsen A bzw. B
verschwenkt werden können.

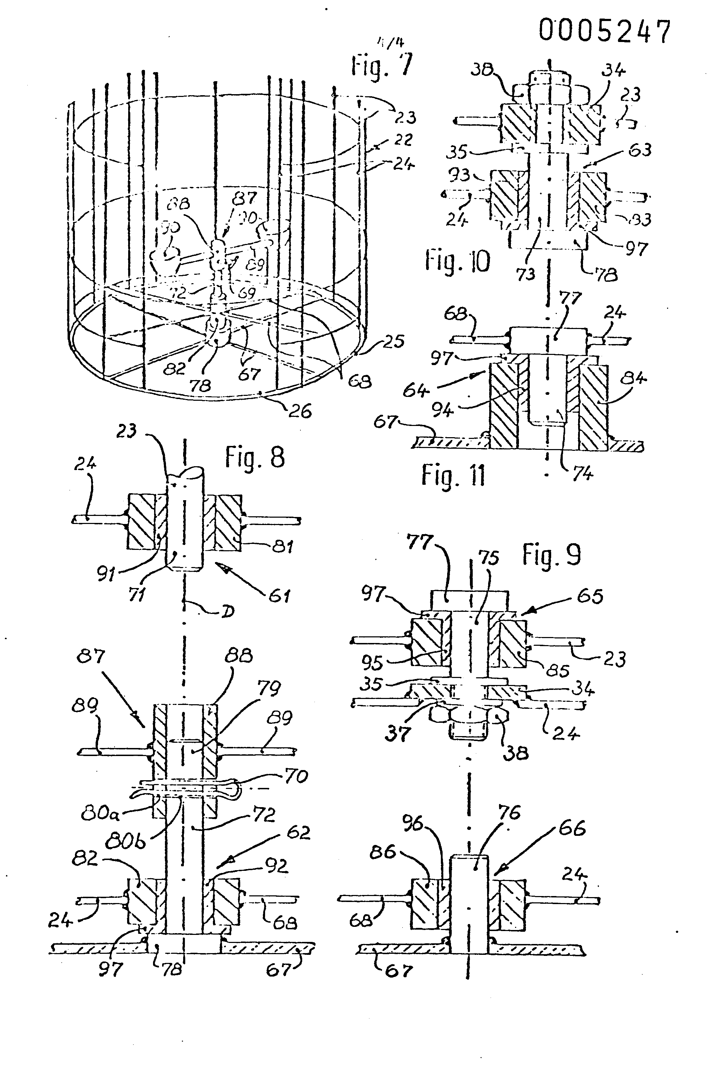

Die gleiche Aufteilung der Käfigkuppel ist in Fig. 6 dargestellt,
wo diese mit 52 bezeichnet ist. Sie besitzt ein als Halbteil ausgebildetes Segment 53 und zwei an diesem um vertikale Achsen O
bzw. P verschwenkbare als Viertelteile ausgebildete weitere Segmente 54 und 52. Die Bodenschale ist bei dem in Fig. 6 symbolisierten Ausführungsbeispiel mit kreisförmiger Randkontur zumindest
des oberen Randbereiches ihrer Seitenwandungen ausgeführt und mit
51 bezeichnet. Die Bodenschale 51 kann dabei dann, wenn die Käfigkuppel 52 auf den oberen Randbereichen ihrer Seitenwandungen
aufsitzen soll, wie das auch bei dem Ausführungsbeispiel gemäß
Fig. 1 der Fall ist, eine solche lichte Weite zwischen ihren
Seitenwandungen bzw. einen solchen lichten Durchmesser aufweisen, daß dieser kleiner ist als der des das Querschnittsvieleck der Käfigkuppel 52 umschreibende Kreises. Dann nämlich kann
die Käfigkuppel 52 auch bei kreisrunder Bodenschale 51 auf den
oberen Randbereichen von deren Seitenwandungen aufsitzen und in geeigneter Weise an diesen lösbar festgelegt werden.

Für die lösbare Festlegung der Käfigkuppel 2 an der Bodenschale 1 sind in Fig. 1 an sich bekannte Klemmelemente 6 in geeigneter Anzahl und Anordnung vorgesehen, mittels welcher eine
untere Randstrebe 2a der Käfigkuppel 2 bzw. von deren jeweiligen
Segmenten 3 bzw. 4 bzw. 5 lösbar, dabei jedoch ausreichend sicher
mit dem umlaufenden Randflansch bzw. der Randverdickung 1b der
hochstehenden Seitenwandungen 1a der Bodenschale 1 verbindbar ist.
Für diese Klemmelemente 6 ist eine Vielzahl unterschiedlicher
Ausführungsformen bekannt. Das Material der Käfigkuppel 2 kann
im übrigen anders, als in Fig. 1 dargestellt, auch durch mittels
geeigneter Rahmenstreben ausgesteiftes sehr dünnes und daher nicht
selbsttragendes Maschendrahtmaterial, wie beispielsweise sogenannten Hasenmaschendraht, gebildet sein. Andererseits kann aber auch
für das eine oder andere der Segmente der Käfigkuppel 2 Vollwandungsmaterial beispielsweise in Form durchsichtigen oder
durchscheinenden oder gar undurchsichtigen Kunststoffplattenmaterials verwendet werden. Die Bodenschale 1 wiederum kann sowohl in Kunststoff, als auch in Blechmaterial ausgebildet sein.
Selbstverständlich weisen die beiden voneinander weg verschwenkbaren Segmente 4 und 5 der Käfigkuppel 2 des Ausführungsbeispieles
gemäß Fig. 1 an ihren die Vorderseite derselben abschließenden
Gitterwandungen nicht dargestellte Verschluß- bzw. Verriegelungselemente auf. Weiterhin ist es selbstverständlich, daß diese
gegenüber dem feststehend gehaltenen Segment 3 um die vertikalen
Achsen A bzw. B relativverschwenkbaren Segmente 4 und 5 nicht
gegenüber der Bodenschale 1 festgelegt sind, sondern sich in
Schließstellung mit ihren unteren Begrenzungsstreben 2a lediglich auf den zugeordneten Bereich des Randflansches 1b der Seitenwandungen 1a der Bodenschale 1 aufliegend abstützen.

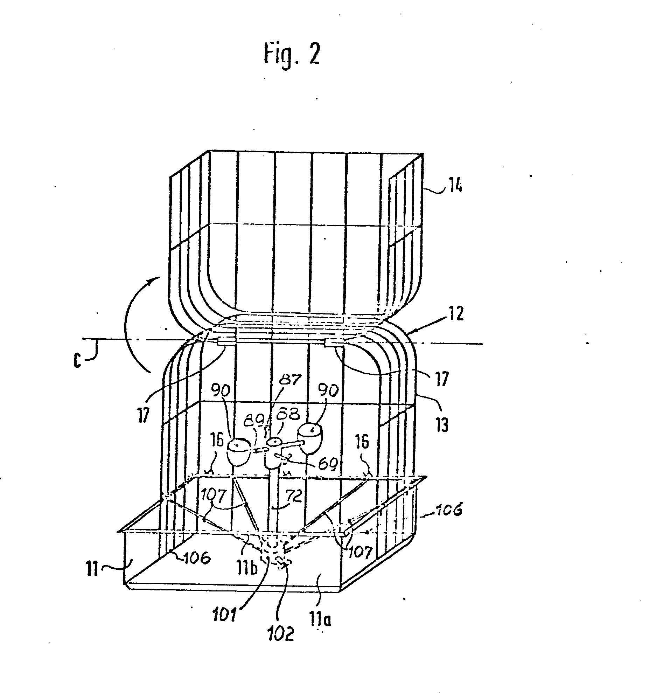

Bei dem Ausführungsbeispiel gemäß Fig. 2 ist die Bodenschale,
die im übrigen in gleicher Weise wie beim Ausführungsbeispiel
gemäß Fig. 1 ausgebildet sein kann, mit 11 und deren Seitenwandungen mit 11a bezeichnet. Bei diesem Ausführungsbeispiel ist die Käfigkuppel mit 12 bezeichnet und zweigeteilt. Sie weist demgemäß die beiden Segmente 13 und 14 auf. Das Segment 13 ist mit seinem unteren Bereich in die Bodenschale 11, welche der Außenkontur des Querschnittes der Käfigkuppel 12 etwa entsprechende lichte Abmessungen zwischen ihren hochstehenden Wandungen 11a aufweist, so eingesetzt, daß dieser untere Bereich mit seinem unteren Rand auf dem Boden der Bodenschale aufsteht. Weiterhin ist das gegenüber diesem somit standfest gehaltenen Segment 13 verschwenkbare Segment 14 mittels Scharnieren 17 für Öffnungsverschwenkung um eine horizontale Achse C am oberen Querbereich eines freien Randsteges des standfest gehaltenen Segmentes 13 angelenkt. Da das Segment 14 der Käfigkuppel 12, wie durch den nicht näher bezeichneten Pfeil in Fig. 2 angedeutet, um die horizontale Achse C verschwenkbar am in die Bodenwanne 11 eingesetzten Segment, 13 der Käfigkuppel 12 angelenkt ist, muß es in seiner Länge so verkürzt sein, daß diese Verschwenkbewegung auch möglich wird. Zu diesem Zweck weist das durch eine solche Kippverschwenkung um die Horizontalachse C angelenkte verschwenkbare Segment 14 eine solche verkürzte Höhenabmessung auf, daß im Schließzustand ein unterer Randsteg desselben auf dem oberen Randflansch 11b der Seitenwandungen 11a der Bodenwanne 11 in der gleichen Weise aufsitzt, wie dies vorstehend bereits für die Segmente 4 und 5 des Ausführungsbeispieles gemäß Fig. 1 beschrieben ist.

Die Bodenwanne 11 kann in der gleichen Weise ausgeführt sein, wie die Bodenwanne 1 gemäß Fig. 1, nämlich in Kunststoff oder als Blechkonstruktion. Da das standfest zu haltende Segment 13 der Käfigkuppel 12 in sie einzufügen ist, sollte sie zweckmäßigerweise der Außenkontur des Querschnittes der Käfigkuppel etwa entsprechende lichte Abmessungen zwischen ihren hochstehenden Wandungen aufweisen, um so zu ermöglichen, daß die Käfigkuppel mit einem unteren Rand zumindest ihres standfest gehaltenen Segmentes auf dem Boden der Bodenschale aufstehend in diese
eingesetzt werden kann. Es hat sich gezeigt, daß je nach Wahl
des Materials und seiner Abmessungen es durchaus möglich ist,
auf Klemmelemente 16 für die Festlegung des standfest zu
haltenden Segmentes 13 an der Bodenschale 11, wie diese in
Fig. 2 dargestellt sind, zu verzichten, weil bei der überwiegenden Zahl der Ausführungsformen das standfest zu haltende
Segment 13 eine so ausreichende Eigensteifigkeit und damit
Standfestigkeit besitzt, daß es nicht durch das Gewicht des
gegengeklappten kippverschwenkbaren Segentes 14 verwunden
und sein Verbund mit der Bodenschale 11 aufgehoben werden kann.
Sollte es für erforderlich erachtet werden, kann jedoch eine
lösbare Fixierung des standfest zu haltenden Segmentes 13
gegenüber der Bodenschale 11 mittels in geeigneter Weise angeordnete Querstege des Gitterwerkes dieses Segmentes 13 mit
entsprechend vorgesehenen Randflanschbereichen 11b der Bodenschale 11 lösbar verbindender Klemmelemente 16 vorgesehen sein,
wie das in Fig. 2 angedeutet ist.

Während davon ausgegangen wird, daß bei den Ausführungsbeispielen gemäß Fig. 1, 2 und 6 die Querschnittskontur der Käfigkuppel 2 bzw. 12 bzw. 52 jeweils rechteckig ausgebildet ist,
ist an dieser Stelle hervorzuheben, daß die Käfigkuppel auch
rechteckigen Querschnitt aufweisen kann. Wie Fig. 5 zeigt,
kann im übrigen auch eine andersgeartete vieleckige Querschnittskontur der Käfigkuppel vorgesehen sein. In Fig. 5 ist das
Klappschema einer Käfigkuppel 42 mit einer einem regelmäßigen
Sechseck entsprechenden horizontalen Querschnittskontur gezeigt. Es ist jedoch hervorzuheben, daß nach der Erfindung
die Querschnittskontur der Käfigkuppel grundsätzlich beliebig
sein kann, und zwar einem beliebigen anderen regelmäßigen Vieleck, wie beispielsweise einem regelmäßigen Fünfeck oder Achteck, oder aber auch einem völlig unregelmäßigen Vieleck entsprechen
kann. Beim Ausführungsbeispiel gemäß Fig. 5 ist wiederum eine
kreisrunde Bodenschale 41 angedeutet, welche in gleicher Weise,
wie im Zusammenhang mit Fig. 6 bereits beschrieben, dafür
sorgt, daß die mit sechseckigem Querschnitt ausgebildete Käfigkuppel 42 mit ihren Vieleckpunkten auf dem Randbereich der
oberen Wandungen der Bodenwanne 41 aufsitzt, wenn die Käfigkuppel in der gleichen Weise an der Bodenwanne 1 festgelegt
ist, wie im Zusammenhang mit dem Ausführungsbeispiel gemäß
Fig. 1 beschrieben. Andererseits kann jedoch die mit vieleckiger
Querschnittskontur ausgebildete Käfigkuppel 42 beim Ausführungsbeispiel gemäß Fig. 5 in der gleichen Weise in eine kreisrunde
Bodenschale 41 eingesetzt sein, wie dies bereits im Zusammenhang
mit Fig. 6 beschrieben ist. Eine solche Ausführung ist in Fig. 5
im einzelnen dargestellt.

Dies ergibt sich aus der Anordnung der vertikalen Schwenkachsen
L, M und N innerhalb der lichten Durchmesserkonturierung der
Bodenwanne 41.

In Fig. 5 sind mehrere Ausführungsmöglichkeiten gemeinsam
schematisch dargestellt. So kann bei der ersten Ausführungsform
beispielsweise die Käfigkuppel 42 sechseckiger Querschnittskontur in zwei spiegelbildliche Segmente 43 und 44 aufgeteilt
sein, von denen das Segment 43 an der Bodenschale festgelegt
und damit standfest gehalten ist, was in der gleichen Weise
geschehen kann, wie bezüglich des Segmentes 3 gemäß Fig. 1
bereits vorstehend beschrieben, oder aber wie in Fig. 2 bezüglich des Segmentes 13 dargestellt und auch beschrieben. Gegenüber
diesem somit standfest gehaltenen Segment 43 der Käfigkuppel 42
ist dann das komplementäre Segment 44 um die Vertikalachse K
zur Öffnung der Käfigkuppel 42 verschwenkbar angelenkt, wie
durch den nicht näher bezeichneten Schwenkpfeil in Fig. 5 angedeutet. Das gegenüber dem standfest gehaltenen Segment 43
verschwenkbare spiegelbildliche Segment 44 ist in Fig. 5 von rechts oben nach links unten schraffiert gezeichnet.

Es ist aber auch eine andere hälftige Aufteilung der Käfigkuppel 42 in zwei Segmente denkbar, wobei die Trennlinie
beider Segmente jetzt nicht mehr vom Mittelpunkt einer Sechseckseite zum Mittelpunkt der gegenüberliegenden Sechseckseite,
sondern vielmehr von einem Sechseck-Eckpunkt zum gegenüberliegenden Sechseck-Eckpunkt verläuft. Das um eine Vertikalachse L
kippverschwenkbare Segment 45 ist bei diesem Ausführungsbeispiel
in entgegengesetzter Richtung schrägschraffiert.

Weiterhin ist in Fig. 5 auch noch eine geeignete Aufteilung
anderer Art dargestellt. Das standfest gehaltene Segment entspricht in diesem Fall nicht mehr der Hälfte der Käfigkuppel 42,
sondern ist mit erheblich größerem Umfangsanteil seiner horizontalen Querschnittskontur ausgeführt. Es ist erkennbar, daß in
diesem Falle das standfest gehaltene Segment eine Umfangslänge
seiner Querschnittskontur aufweist, welche vier Seiten der
Sechseckfläche umfaßt, nämlich die in Fig. 5 linke, die beiden
oberen und die rechte Seite dieses Polygons. Das um die Vertikalachse M verschwenkbare Segment ist in diesem Falle etwa rautenförmig ausgebildet. Die Öffnungsverschwenkung dieses Segmentes
erfolgt durch eine Kippverschwenkung in Richtung des nicht näher
bezeichneten Pfeiles um den die Schwenkachse symbolisierenden
Punkt M. Es ist erkennbar, daß sich diese Ausführungsform häufig
dort empfehlen wird, wo beispielsweise wegen Wahl verhältnismäßig
dünnen Materials für die Bildung der Käfighaube 42 diese vergleichsweise labil ausfällt und man daher Sorge für eine möglichst gute
Randsteifigkeit des unteren Wandungsbereiches des standfest
zu haltenden Segmentes längs seiner Seitenwände tragen sollte.
Hier trägt die Vergrößerung der Standlinie gemäß dieser bevorzugten
Ausführungsform bei.

Wie aus Fig. 5 erkennbar, kann das verschwenkbare Segment dieser
letztbeschriebenen Ausführungsform seinerseits in zwei gegeneinander verschwenkbare Segmente 46 und 47 aufgeteilt sein, wobei das Segment 47 am verschwenkbaren Segment 46 für Verschwenkung
um eine vertikale Schwenkachse N angelenkt ist. Diese Ausführungsform kann überall dort von speziellem Nutzen sein,
wo es gilt, den Öffnungsspalt für den Zugriff ins Innere über
eine möglichst lange Zeit der Verschwenkbewegung des schwenkbaren Segmentes 46, 47 auf konstanter Breite halten zu können.
Dies kann bei der Haltung bestimmter Tiere von Vorteil sein,
welche aufgrund ihrer Eigenarten die Neigung haben, nicht etwa
die praktisch vollständige Öffnung der Käfigkuppel abzuwarten,
sondern bereits durch einen verhältnismäßig geringen Öffnungsschlitz durchzuschlüpfen versuchen. Die beiden Teilsegmente 46
und 47 des verschwenkbaren Segmentes sind in Fig. 5 nicht nur
unterschiedlich zueinander, sondern auch unterschiedlich zu
den verschwenkbaren Segmenten der beiden vorher beschriebenen
Ausführungsformen schraffiert.

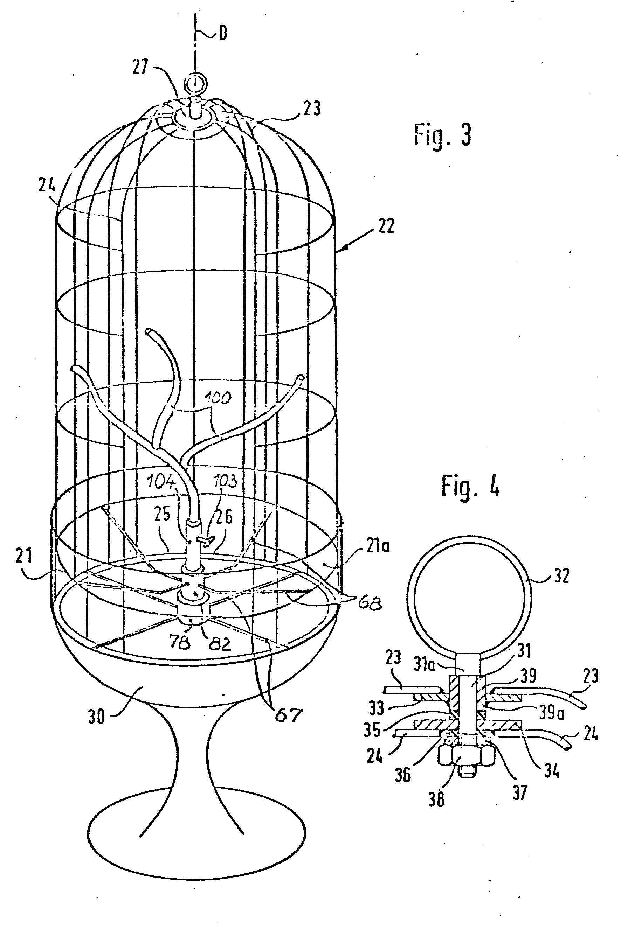

Bei der in Fig. 3 dargestellten weiteren Ausführungsform der
Erfindung ist eine etwa glockenförmige Ausführung der Käfigkuppel 22 vorgesehen, welche in zwei etwa hälftige Segmente
aufgeteilt ist. Beide Segmente 23 und 24 haben jeweils etwa
halbkreisförmige Konturierung, so daß sie in Schließstellung
gemeinsam der Käfigkuppel 22 eine etwa kreisförmige Querschnittskontur vermitteln. Die beiden Segmente 23 und 24 sind so ausgebildet, daß sie beide in die Bodenwanne 21 eingesetzt werden
können. Dabei weist beim dargestellten Ausführungsbeispiel
das als standfest zu haltendes Segment fungierende Halbschalensegment 23 einen etwas größeren Querschnittsdurchmesser seines
horizontalen Halbkreisquerschnittes auf als das Segment 24,
welches für Drehverschwenkung um die vertikale Achse D am standfest gehaltenen Segment 23 mittels eines als Ganzes mit 27
bezeichneten Drehlagers aufgehängt ist.

Grundsätzlich benötigt bei einer solchen Ausführung das drehverschwenkbare Segment 24 keinerlei Führung auf seiner drehlagerfernen Seite. Es kann jedoch insbesondere bei besonders leichter
Ausführung dieses drehverschwenkbaren Segmentes 24 zweckmäßig sein, ihm eine weitere bodenschalenseitige Führung zu geben.
Dies kann dadurch geschehen, daß dieses Segment 24 auf einem
nicht dargestellten bodenschalenfesten Stift zusätzlich geführt
ist. Andererseits hat es sich gezeigt, daß es in den meisten
Ausführungsfällen bereits ausreichend ist, wenn der untere,
bodenwannenseitige Rand des drehverschwenkbaren Segmentes 24
durch einen Stützring 26 ausgesteift ist. In einem solchen
Fall kann dann dieser Stützring 26, der eigentlich dafür dient,
die Labilität des aus Gitterwerk gebildeten Halbschalengebildes
des Segmentes 24 auch bei dessen Ausführung in verhältnismäßig
leichtem Material zu vermindern und seine Eigenfestigkeit und
Verwindungssteifigkeit zu verbessern, dazu herangezogen werden,
seinerseits als Führungselement zu dienen. Zu diesem Zwecke kann
ein gleichen Aussteifungszwecken für das standfest gehaltene
Segment 23 dienender Ring 25 im unteren Randbereich des Segmentes
23 vorgesehen sein, der so angeordnet und ausgebildet ist, daß
er als Gegenring für den Stützring 26 des Segmentes 24 dient,
indem er den Stützring 26 des drehverschwenkbaren Segmentes 24
umgreift, wodurch bei Drehverschwenkung des Segmentes 24 gegenüber
dem standfest gehaltenen Segment 23 beide Ringe aufeinander
laufen. In Fig. 3 sind als Stützring und Gegenring der beiden
Segmente 24 und 23 deren ihre untere Randbegrenzung darstellenden
reifenartigen Randstege herangezogen. Dadurch liegen Stützring
26 und Gegenring 25 im untersten, besonders bodenschalenbodennahen
Bereich. Dies ergibt eine besonders kostengünstige Ausführung.
Soll jedoch sowohl die Leichtgängigkeit der Drehverschwenkungsanlenkung des Segmentes 24 am standfest gehaltenen Segment 23 verbessert und gleichzeitig ein Aufwirbeln von Bodenschaleninhalt
während der Schwenkbewegung weitestgehend vermieden werden, so
kann man zweckmäßig den Stützring 26 und entsprechend auch den
Gegenring 25 in einem Abstand zum Boden der Bodenschale 21 anordnen. Als besonders zu bevorzugen hat sich in einem solchen Fall
ein Höhenabstand gegenüber dem Bodenschalenboden von etwa der Höhe der hochstehenden Bodenschalenwandung erwiesen, so daß
Stützring 26 und Gegenring 25 etwa in Höhe des Bodenschalenrandes zu liegen kommen.

Grundsätzlich kann als Drehlager ein handelsübliches Wälzlager Verwendung finden, dessen einer Lagerring mit dem standfest gehaltenen Segment 23 und dessen anderer Lagerring mit dem
gegenüber diesem drehverschwenkbaren Segment 24 verbunden ist.
In Fällen jedoch, wo der Aufwand für ein solches handelsübliches
Wälzlager, das beispielsweise ein Kugellager sein kann, nicht
erwünscht ist, kann das Drehlager 27 etwa eine Ausbildung erfahren, wie diese in Fig. 4 dargestellt ist. Hier handelt es
sich um eine solche Drehlagerausführung, die zwar eine Vielzahl von Einzelteilen aufweist, dabei jedoch den Vorteil bietet,
daß all diese Teile in einer einfachst ausgestatteten Schlosserwerkstatt zur Verfügung zu stehen pflegen oder dort hergestellt
werden können, ohne daß ein besonderer Maschinenpark erforderlich
wäre oder auf besondere Präzision geachtet werden müßte. Das
in Fig. 4 dargestellte Drehlager weist einen Lagerstift 31 auf,
der mit einem Bund 31a auf einer Buchse 39 ruht, die vom standfest gehaltenen Segment 23 getragen wird. In Fig. 4 ist gezeigt,
daß zu diesem Zwecke die Buchse 39 beispielsweise durch Verschweißen einer Scheibe 33 festgelegt ist, die ihrerseits als
Mittelstück des standfest gehaltenen Segmentes 23 dient, indem
an ihr dessen Gitterstäbe angeschweißt sind. Auf diese Weise
wird der Lagerstift 31 vom standfesten Segment 23 getragen. Am
unteren, durch die Scheibe 33 hindurchragenden Bereich 39a der
Buchse 39 liegt eine Zwischenlagscheibe 35 aus reibungsarmem
Material, wie beispielsweise Polytetrafluoräthylen (Teflon) an.
Als nächstes ist auf das nach unten ragende Ende des Lagerstiftes 31 eine weitere Scheibe 34 aufgefädelt, an welcher die
Gitterstäbe des verschwenkbaren Segmentes 24 beispielsweise
gleichfalls durch Verschweißen festgelegt sind. Unterhalb der
damit als Mittelstück des verschwenkbaren Segmentes 24 dienenden Scheibe 34 ist eine gleichartige Zwischenlagscheibe 36 aus
Polytetrafluoräthylen und eine bei Verschraubungen übliche
Unterlagscheibe 37 aus Stahl angeordnet. Den Abschluß bildet
eine auf das mit Schraubgewinde versehene freie, nach unten
ragende Ende des Lagerstiftes 31 aufgeschraubte Mutter 38,
die auch als Flügelmutter ausgebildet sein kann. Durch Anziehen der Mutter 38 werden einerseits alle auf dem Lagerstift
31 sitzenden Teile zu einer das Drehlager 27 bildenden Gesamtheit verspannt und wird andererseits die Möglichkeit gegeben,
den Normaldruck auf die aufeinanderlaufenden Flächen einander
benachbarter Teile so einzustellen, daß die gewünschte Reibung
zwischen diesen auftritt. In Fällen, wo Zwischenlagscheiben
aus reibungsarmem Material, wie die Scheiben 35 und 36, nicht
vorhanden sind, ist es durchaus möglich, auf diese zu verzichten
und die Scheibe 34 unmittelbar auf der unteren Stirnfläche der
Buchse 39 laufen zu lassen, da deren durch die Scheibe 33
hindurchragendes unteres Ende 39a als Abstandshaltering fungiert.
Ist aus Gründen beispielsweise größerer Bewegungsfreiheit
zwischen den beiden Segmenten 23 und 24 ein größerer Abstand
zwischen den Scheiben 33 und 34 erwünscht, können auch noch
zusätzliche Abstandshalteringe zwischengeschoben werden.

An seinem oberen Ende weist im übrigen der Lagerstift 31 eine
Aufhängöse 32 auf. Diese dient gleichzeitig als Traggriff. Es
kann aber auch eine andere Traggriffausführung vorgesehen sein.

In Fig. 3 ist an einem Beispiel gezeigt, wie die Bodenschale 21
des Heimtierkäfigs nach der Erfindung auf einem an sich bekannten
Standfuß 30 angeordnet werden kann, um dem Heimtierkäfig insgesamt eine besonders gute Standfestigkeit zu geben und ihn
auf eine für bequeme Einsicht günstige Höhe zu geben. Selbstverständlich kann jede beliebige andere Standfußausführung zur
Verwendung kommen.

In Fig. 3 ist nicht gezeigt, daß in der gleichen Weise, wie
bei den Ausführungsbeispielen gemäß Fig. 1 und 2 auch hier
das standfest gehaltene Segment 23 mit geeigneten Elementen,
wie beispielsweise Schnellverschlüssen oder Klemmelementen,
an der Bodenschale zusätzlich festgelegt sein kann. Gleichermaßen
kann auch die Bodenschale 21 ihrerseits, statt lediglich auf
den Standfuß 30 aufgestellt zu sein, an diesem zusätzlich festgelegt sein. Bodenschale 21 und Standfuß 30 können dabei je
nach Herstellungsart und gewünschtem ästhetischem Erscheinungsbild aus Metall, insbesondere Metallblech, oder aber auch aus
Kunststoff gebildet sein.

In einem Heimtierkäfig nach Art des in Fig. 3 dargestellten
Ausführungsbeispiels wird man mit Vorzug Einbauten vorsehen,
um den im Käfig gehaltenen Tieren die Möglichkeit zum Klettern,
Springen, Hangeln, Toben oder auch nur Sitzen und Ruhen zu geben.
Die Ausführungsform gemäß Fig. 3, bei welcher das drehverschwenkbare Segment 24 innerhalb des standfest gehaltenen Segmentes 23
läuft, d.h. bei Öffnungsbewegung sich in den von diesem umschlossenen Raum hineinschiebt, empfiehlt es sich besonders,
einen herkömmlichen Papageienständer oder einen Kletterbaum
oder dergleichen vorzusehen, der im Käfiginneren ohne Berührung
mit den Segmenten der Käfigkuppel 22 bodenwannenfest gehalten ist.
Möchte man jedoch gern querverlaufende Sitzstäbe, Kletteräste
oder dergleichen vorsehen können, welche am standfest gehaltenen
Segment 23 festgelegt sind, dann ist eine Ausführungsform zu
wählen, bei welcher das verschwenkbare Segment 24 mit etwas
größerem Durchmesser als das standfest gehaltene Segment 23
ausgeführt ist, so daß es auf dessen Außenseite laufen kann, d.h.
sich bei Öffnungsbewegung auf der Außenseite des standfest gehaltenen Segmentes 23 über dieses schiebt. Diese im übrigen nicht

dargestellte Variante bietet die Möglichkeit, daß die käfigkuppelfesten Einbauten nicht nur diametral den Innenraum der
Käfigkuppel 22 durchragen können, sondern sogar in den in Schließstellung von dem verschwenkbaren Segment 24 abgedeckten Raum
hineinragen können. Bei den mit Kippverschwenkung der betreffenden
Segmente gegeneinander arbeitenden Ausführungsformen gemäß Fig. 1
und 2 können beide Möglichkeiten genutzt werden, nämlich die
käfigkuppelfeste Anordnung von Einbauten, wie beispielsweise
am standfest gehaltenen Segment festgelegten Kletterästen oder
dergleichen, und von bodenwannenfest angeordneten und gegenüber
den Käfigkuppelsegmenten befestigungslosen Einbauten, wie
beispielsweise einem herkömmlichen Papageienständer oder einem
Sitz- bzw. Kletterbaum.

Es ist erkennbar, daß insbesondere die mit Drehverschwenkung
um eine vertikale Achse arbeitende Ausführungsform gemäß Fig. 3
in beliebiger Größe ausgeführt werden kann, ohne daß die
eingangs beschriebenen Probleme bekannter Käfigausführungen
aufzutreten vermögen. Wie sich gezeigt hat, können jedoch auch
die mit Kippverschwenkung arbeitenden Ausführungsformen, wie
beispielsweise in Fig. 1 und 2 gezeigt, so großvolumig ausgeführt
werden, daß sie der überwiegenden Mehrzahl praktischer Anforderungen an eine moderne Heimtierhaltung in Wohnungen entsprechen,
ohne dabei dem Tierhalter Schwierigkeiten zu bieten, die Öffnungsbewegung der Käfigkuppel mit einer Hand zu bewerkstelligen. Es ist
erkennbar, daß mit einem Handgriff die Käfigkuppel des Heimtierkäfigs nach der Erfindung so geöffnet werden kann, daß ohne Beeinträchtigung des Wohlbefindens des im Käfig gehaltenen Tieres
dieses eine maximalflächige Austrittsöffnung zur Verfügung hat,
um in die Umgebung des Käfigs gelangen zu können, und dadurch
keinerlei psychologischen Zwängen ausgesetzt ist und andererseits in gleicher Weise beispielsweise aus freiem Flug wieder auf
seinem im Käfiginneren angeordneten Papageienständer oder einer
Sitzstange oder dergleichen landen kann, worauf der Käfig sich
wiederum mit einem Handgriff höchst einfach und geräuscharm verschließen läßt, ohne dadurch die Tiere zu verschrecken. Der Tierhalter hat also jederzeit Zutritt zu seinem Tier und
kann in höchst einfacher und aufwandsloser Weise Kontakt
mit diesem halten, wobei er ihm zu jedem gewünschten
Zeitpunkt gitterlose Freiheit gewähren kann, es andererseits aber genauso mühelos wieder unter Verschluß zu bringen
vermag.

In Fig. 1 und 2 ist schematisch dargestellt, wie am standfest an der Bodenschale 1 bzw. 11 gehaltenen Segment 3
bzw. 13 der Käfigkuppel 2 bzw. 12 ein die Radialstreben
107 aufweisender mehrstrebiger Stützstern festgelegt ist.
Dabei ist die dargestellte Anordnung so getroffen, daß
die segmentseitigen Enden der Radialstreben 107 jeweils
im Bereich des oberen Randes der Bodenschale 1 bzw. 11
am standfest gehaltenen Segment 3 bzw. 13 festgelegt sind,
während ihr ins Innere der Käfigkuppel 2 bzw. 12 ragendes
Ende mit einer Befestigungsbuchse 101 oder einem Standring
oder dergleichen verbunden ist. Dabei ist die Anordnung
so getroffen, daß diese Befestigungsbuchse 101 bzw. der
Standring in der Bodenschale 1 bzw. 11 versenkt angeordnet
ist.

Bei dem in Fig.1 dargestellten Ausführungsbeispiel, bei
welchem das standfest gehaltene Segment 3 auf einem entsprechenden Standflansch der Seitenwandungen 1a der Bodenschale 1 aufsitzend sich an dieser abstützt, ohne daß
seine Gitterwerkstreben ins Innere der Bodenschale 1 eingreifen, wird eine Ausführung der dargestellten oder einer
ähnlichen Art zu bevorzugen sein, wenn es gilt, die Befestigungsbuchse 101 bzw. einen Standring im Inneren der
Bodenschale 1 unterzubringen. Um eine bessere Standfestigkeit zu erreichen, kann in nicht dargestellter Abwandlung
den Radialstreben 107 eine solche Formgebung vermittelt
werden, daß sie mit einem nicht unerheblichen Bereich
ihrer Länge bodenschalenbodenparallel verlaufen, wobei sie allerdings im Gebrauchszustand nicht notwendigerweise
sich mit diesem bodenschalenbodenparallelen Bereich in
Anlage am Bodenschalenboden befinden müssen.

Beim in Fig.2 dargestellten Ausführungsbeispiel hingegen greifen die Gitterwerksstreben des standfest gehaltenen Segmentes 13 ins Innere der Bodenschale 11 ein
und stehen auf dem Bodenwannenboden auf. Hier empfiehlt
es sich im Interesse einer besonders guten Standfestigkeit
des Segmentes 13 der Käfigkuppel 12 für den Fall, daß dieses
von der Bodenschale 11 abgehoben und abgestellt werden soll,
die Radialstreben 7 nicht - wie gezeigt - am Gitterwerk
des Segmentes 13 im Bereich des Wandungsflansches 11b der
Seitenwandungen 11a der Bodenschale 11 angreifen zu lassen,
sondern an einem umlaufenden Standreif 106.

In die von dem durch die Radialstreben 107 gebildeten
mehrstrebigen Stütz- bzw. Tragstern gehaltene Befestigungsbuchse 101 ist ein Tragstift 72 eingefügt und mittels
einer Befestigungseinrichtung, beispielsweise einer Knebelschraube 105 festgelegt. Auf dem ins Käfiginnere hineinragenden freien Ende des ausreichende Länge aufweisenden
Tragstiftes 72 ist eine über dieses geschobene und mittels
eines geeigneten Feststellorgangs, wie beispielsweise
einer Klemmschraube 69, festgelegt Hülse 88 angeordnet.
Die Hüle 88 trägt zwei Tragstreben 89, welche jeweils
einen Futternapf 90 in geeigneter Stellung abstützen,
wie in Fig. 1 und 2 schematisch dargestellt. Es ist ersichtlich, daß in der gleichen Weise statt einer solcherart ausgebildeten Futternapftragbrücke 87 vom freien Ende
des feststehenden Lagerstifes 72 auch andere erforderliche
oder zweckdienliche Einbauten so abgestützt werden können,
daß sie ohne Veränderung ihrer Stellung relativ beispielsweise zum Stützstern 107 des standfest gehaltenen Segmentes 3 bzw. 13 der Käfigkuppel 2 bzw. 12 und damit auch ohne Veränderung ihrer relativen Stellung zu diesem Segment 3 bzw. 13 zusammen mit der geschlossenen Käfigkuppel 2 bzw. 12 abgehoben werden können, wenn beispielsweise eine Reinigung der Bodenschale 1 (Fig.1) bzw. 11 (Fig.2) erforderlich werden sollte, was natürlich die beabsichtigte vorteilhafte Folge hat, daß auf diesen Einbauten niedergelassene Tiere beim Abheben der Käfigkuppel 2 bzw. 12 auf diesen verharren bleiben und daher mit der Käfigkuppel 2 bzw. 12 bequem in dieser geborgen verbleibend abgestellt werden können, um dann in der gleichen Weise wieder mit der Käfigkuppel 2 bzw. 12 auf die gereinigte oder desinfizierte oder sonstwie behandelte Bodenschale 1 bzw. 11 aufgesetzt zu werden.

Bei dem in Fig.3 dargestellten Ausführungsbeispiel ist die Anordnung im Prinzip gleichartig getroffen. Hier sind die beiden relativ zueinander um die vertikale Achse D drehverschwenkbaren Segmente 23 und 24 der Käfigkuppel 22 in ihren unteren Bereichen jeweils ausgesteift. So ist der Tragring 25 des standfest gehaltenen Segmentes 23 der Käfigkuppel 22 über einen vierstrebigen Stützstern 67 mit einem Lagerstift 104 eines unteren Radiallagers verbunden, indem die Radialstreben 67 an einem nach unten gelegenen Radialkragen 78 desselben angreifen. In gleicher Weise ist ein Stützring 26 des drehverschwenkbaren Segmentes 24 der Käfigkuppel 22 mit einer Lagerbuchse 82 über gleichfalls einen vierstrebigen Stützstern 68 verbunden. Dabei läuft die Lagerbuchse 82 des drehverschwenkbaren Segmentes 24 auf der nach oben weisenden Stirnfläche des Radialkragens 78 des feststehenden Lagerstiftes 104, so daß eine einfache und äußerst kostengünstige Lagerungseinrichtung für die unteren Bereiche der gegeneinander

drehverschwenkbaren Segmente 23, 24 erbracht ist.

Der Lagerstift 104 ist seinerseits hohl ausgebildet und
bietet daher die Funktion eines Tragstiftes, indem in
ihn im Käfiginneren benötigte Einbauten, wie beispielsweise Papageienständer, Sitzstangen, Sitzbäume, Tragbrücken
für Futternäpfe oder dergleichen, mit ihrem unteren Ende
eingeführt und festgelegt werden können. Zum Festlegen ist
in Fig.3 eine Knebelschraube 103 vorgesehen. Bei diesem
Ausführungsbeispiel ist gezeigt, wie ein Sitzbaum 100
in dem als Tragstift dienenden Lagerstift 104 gehaltert
sein kann. Selbstverständlich können statt eines solchen
Sitzbaums 100 auch Futternapftragbrücken nach Art der
in Fig. 1 und 2 dargestellten Tragbrücke 87 oder auch
anderer Ausgestaltung oder aber Papageienständer, Sitzstangen oder dergleichen abgestützt werden, und zwar
in allen Fällen dies derart, daß beim Abheben der gesamten Käfigkuppel 22 auch bei dem mit gegeneinander
drehverschwenkbaren Segmenten 23, 24 arbeitenden Ausführungsbeispiel gemäß Fig.3 diese Einbauten automatisch
mitabgehoben werden, so daß auch die auf diesen Einbauten niedergelassenen Tiere mit von der Bodenschale
abgehoben und entfernt werden können, ohne daß es zu
irgendwelchen Beunruhigungen oder Belästigungen derselben käme.

Bei der in Fig.7 dargestellten Ausführungsform ist eine
ähnlich dem Ausführungsbeispiel gemäß Fig. 3
etwa glockenförmige Ausführung der Käfigkuppel 22 vorgesehen, welche in zwei etwa hälftige Segmente aufgeteilt
ist. Beide Segmente 23 und 24 haben jeweils etwa halbkreisförmige Konturierung, so daß sie in Schließstellung gemeinsam der Käfigkuppel 22 eine etwa kreisförmige Querschnittskontur vermitteln. Die beiden Segmente 23 und 24 sind so
ausgebildet, daß sie beide in die Bodenwanne 21 eingesetzt
werden können. Dabei weist beim dargestellten Ausführungsbeispiel das als standfest zu haltendes Segment fungierende
Halbschalensegment 23 einen etwas größeren Querschnittsdurchmesser seines horizontalen Halbkreisquerschnittes auf
als das Segment 24, welches für Drehverschwenkung um die
vertikale Achse D am standfest gehaltenen Segment 23 mittels eines als Ganzes mit 27 bezeichneten Drehlagers aufgehängt ist.

Der untere, bodenwannenseitige Rand des drehverschwenkbaren
Segmentes 24 ist durch einen Stützring 26 ausgesteift, der
dafür dient, die Labilität des aus Gitterwerk gebildeten
Halbschalengebildes des Segmentes 24 auch bei dessen Ausführung in verhältnismäßig leichtem Material zu vermindern
und seine Eigenfestigkeit und Verwindungssteifigkeit zu
verbessern. Zum gleichen Zweck ist für das standfest gehaltene Segment 23 im unteren Bereich desselben ein Ring 25
vorgesehen, der so angeordnet und ausgebildet ist, daß er
den Stützring 26 des drehverschwenkbaren Segmentes 24 umgreift. In Fig.7 sind als solche Stützringe 26 bzw. 25 der
beiden Segmente 24 und 23 deren ihre untere Randbegrenzung
darstellenden reifenartigen Randstege herangezogen. Dadurch
liegen die Stützringe 26 bzw. 25 im untersten, besonders
bodenschalenbodennahen Bereich. Dies ergibt eine besonders
kostengünstige Ausführung.

Grundsätzlich kann auch hier als Drehlager ein handelsübliches Wälzlager Verwendung finden, dessen einer Lagerring mit dem standfest gehaltenen Segment 23 und dessen anderer Lagerring mit dem gegenüber diesem drehverschwenkbaren Segment 24 verbunden ist. In Fällen jedoch, wo der Aufwand für ein solches handelsübliches Wälzlager, das beispielsweise ein Kugellager sein kann, nicht erwünscht ist, kann das Drehlager 27 etwa eine Ausbildung erfahren, wie diese in Fig.4 dargestellt und bereits vorstehend beschrieben ist. Hier handelt es sich um eine solche Drehlagerausführung, die zwar eine Vielzahl von Einzelteilen aufweist, dabei jedoch den Vorteil bietet, daß all diese Teile in einer einfachst ausgestatteten Schlosserwerkstatt zur Verfügung zu stehen pflegen oder dort hergestellt werden können, ohne daß ein besonderer Maschinenpark erforderlich wäre oder auf besondere Präzision geachtet werden müßte.

Bei diesem Hängelager 27, das ein Radiallager mit feststehendem Lagerstift ist, auf welchem die mit dem drehverschwenkbaren Segment 24 verbundene Scheibe 34 läuft, werden Axialkräfte, die sich durch das Gewicht des drehverschwenkbaren Segmentes 24 ergeben, über den Bund 31a des Stiftes 31 in die standfest gehaltene Lagerbuchse 39 eingeleitet. Erfindungsgemäß ist bei diesem Ausführungsbeispiel zur Zweipunktdefinierung der vertikalen Schwenkachse D ein weiteres Radiallager vorzusehen, das als reines Radiallager mit axialem Bewegungsspiel ausgebildet ist. Ein solches Lager ist beispielsweise in Form des unteren Radiallagers 66 von Fig. 9 gezeigt und hier in Kombination mit der Hängelagerkonstruktion gemäß Fig. 4 auch für den Fall der Nachrüstung bekannter Ausführungen gattungsgemäßer Heimtierkäfige im Sinne der Erfindung zu verwenden.

- 54 -

In Fig. 7 ist gleichermaßen schematisch dargestellt,
wie die beiden relativ zueinander um die vertikale
Achse D drehverschwenkbaren Segmente 23 und 24 der
Käfigkuppel 22 in ihren unteren Bereichen jeweils
ausgesteift sind. So ist der Tragring 25 des standfest gehaltenen Segmentes 23 der Käfigkuppel 22,
welcher bevorzugt der bekannte untere Abschlußring
sein kann, mit welchem sich dieses Segment 23 auf
die lediglich in Fig. 1 dargestellte Bodenschale 21
stützt, über einen vierstrebigen Stützstern 67 mit
einem Lagerstift 72 eines unteren Radiallagers 62
verbunden. In gleicher Weise ist ein Stützring 26
des drehverschwenkbaren Segmentes 24 der Käfigkuppel 22 mit einer Lagerbuchse 82 dieses unteren
Radiallagers 62 über gleichfalls einen vierstrebigen
Stützstern 68 verbunden. Diese Lagerung ist in Fig. 8
näher dargestellt.

Fig. 8 zeigt eine Doppellagerausführung für die beiden
relativ zueinander drehverschwenkbaren Segmente 23
und 24 der Käfigkuppel 22, bei welcher das untere
Radiallager als Axialkräfte aufnehmendes Stehlager
mit feststehendem

- 55 -

Lagerstift und das obere Radiallager als reines Radiallager
mit axialem Bewegungsspiel und gleichfalls feststehendem
Lagerstift ausgebildet ist.

Das untere Radiallager weist, wie aus Fig. 8 ersichtlich,
einen am Tragstern 67 festgelegten Lagerstift 72 mit
einem Lagerbund 78 auf. Auf diesem Lagerstift 72 des als
Ganzes mit 62 bezeichneten unteren Radiallagers läuft eine
mit dem drehverschwenkt ren Segment 24 über den Stützstern
68 verbundene Lagerbuchse 82. Zur Verbesserung der Laufeigenschaften und zur praktisch vollständigen Ausschaltung
von Laufgeräuschen ist in die Lagerbuchse 82 eine Laufhülse 92 mit einem von ihrem unteren Ende über die untere
Stirnfläche der Lagerbuchse 82 radial wegstehenden Radialkragen 97 aus reibungsverminderndem Material, wie beispielsweise Polytetrafluoräthylen (Teflon), eingesetzt.
Mit diesem Radialkragen läuft die Laufhülse 92 auf dem
Lagerbund 78 des Lagerstiftes 72 und stützt somit die
sich aus dem Gewicht des drehverschwenkbaren Segmentes 24
ergebenden Axialkräfte laufgeräuschfrei ab. Statt der dargestellten Ausführungsform hätte auch eine radialkragenlose Laufhülse Verwendung finden können, wie diese von
der Hülse 96 des unteren Radiallagers 66 gemäß Fig.8 dargestellt ist. Zur Vermeidung eines an sich auch möglichen
direkten Auflaufens der unteren Stirnfläche der Lagerbuchse
82 auf dem Lagerbund 78 des Lagerstiftes 72 kann in einem
solchen Fall eine einfache Unterlagscheibe aus gleichartigem reibungsverminderndem Material zwischengeschaltet
werden.

Das obere Radiallager 61 gemäß Fig.8 ist dadurch als
reines Radiallager ausgebildet, das auf dem mit dem standfest gehaltenen Segment 23 der Käfigkuppel 22 festverbundenen Lagerstift 71 eine Lagerbuchse 81 läuft, die
über geeignete Verbindungselemente, wie beispielsweise
Tragstreben, mit dem drehverschwenkbaren Segment 24 verbunden ist oder an der dessen Gitterstäbe beispielsweise
durch Verschweißung unmittelbar befestigt sind. Vorzugsweise ist in die Lagerbuchse 81 eine Laufhülse 91 aus
bereits beschriebenem reibungsverminderndem Material eingefügt, so daß diese auf der entsprechenden Lagerfläche
des Lagerstiftes 71 läuft.

Bei dem Ausführungsbeispiel einer Zweipunktlagerung gemäß
Fig.9 ist das obere Radiallager 65 als Axialkräfte aufnehmendes Hängelager mit drehbarem Lagerstift 75 und das
untere Radiallager 66 als reines Radiallager mit feststehendem Lagerstift 76 ausgeführt.

Das obere Radiallager 65 weist eine drehfest gehaltene
Lagerbuchse 85 auf, die über geeignete Verbindungsstreben
oder durch unmittelbares Angreifen der Gitterstäbe des
ortsfest gehaltenen Segmentes an ihr mit diesem verbunden ist.
In sie ist eine Laufhülse 95 aus reibungsverminderndem
Material, wie beispielsweise Polytetrafluoräthylen (Teflon),
mit einem Radialkragen 97 ähnlicher Ausführung wie die
Laufhülse 92 des unteren Radiallagers 62 gemäß Fig.8, jedoch in umgekehrter Anordnung eingefügt. Gegenüber dem
Radialkragen 97 stützt sich ein Bund 77 des Lagerstiftes 75
drehbeweglich ab, über welchen die Axialkräfte in die Lagerbuchse 85 eingeleitet werden, die aus dem Gewicht des drehverschwenkbaren Segmentes 24 resultieren, das am Lagerstift
75 hängt. Es ist erkennbar, daß der Lagerstift 75 auf seinem
nach unten ragenden freien Ende mit Gewinde versehen ist,
auf welches unter Zwischenschaltung einer Zwischenlagscheibe
35 eine mit dem drehverschwenkbaren Segment 24 in der gleichen Weise, wie bereits im Zusammenhang mit Fig.4 beschrieben,
verbundene Scheibe 34 aufgeschoben und unter Zwischenschaltung einer weiteren Zwischenlagscheibe 37 mittels einer
Mutter 38 festverschraubt ist, so daß der Lagerstift 75

mit dem drehverschwenkbaren Segment 24 eine drehbare Einheit
bildet, die über seinen Lagerbund 77 an der Lagerbuchse 85
des Hängelagers 65 aufgehängt ist.

Da hier das obere Radiallager 65 als Axialkräfte aufnehmendes Lager ausgebildet ist, ist das zugehörige untere Radiallager 66 als reines Radiallager ausgebildet. Sein Lagerstift 76 ist beispielsweise mittels Verschweißens am standfesten Stützstern 67 des Segmentes 23 festgelegt. Auf ihm
läuft die über den Stützstern 68 oder über geeignete Radialstreben mit dem drehverschwenkbaren Segment 24 verbundene
Lagerbuchse 86, in welche eine radialkragenlose Laufhülse 96
aus bereits beschriebenem reibungsverminderndem Material
eingebracht ist, so daß ein wartungsfreier und praktisch
geräuschloser Trockenlauf mit praktisch unendlicher Standzeit
gewährleistet ist.

In Fig.10 ist eine andere Ausführung für ein oberes Radiallager gezeigt, welches gleichfalls als Hängelager mit Aufnahmemöglichkeit für Axialkräfte ausgeführt ist, bei welchem jedoch im Gegensatz zum oberen Radiallager 65 gemäß
Fig.5 der Lagerstift 73 drehfest gehalten ist. Bei diesem
oberen Radiallager 63, welches dafür bestimmt ist, mit
einem unteren Radiallager 66 gemäß Fig.9 zusammenzuwirken,
weist das nach oben ragende freie Ende des Lagerstiftes 73
Außengewinde auf, auf welches nach Aufsetzen einer Zwischenlagscheibe 35 ein Innengewinde aufweisender Ring 34
aufgeschraubt und mittels einer Mutter 38 gekontert ist,
der über geeignete Tragstreben oder durch unmittelbare
Befestigung der Gitterstäbe des standfest gehaltenen Segmentes 23 mit diesem verbunden ist. Das bedeutet, daß
auch der Lagerstift 73 drehfest am standfest gehaltenen
Segment 23 festgelegt ist. Auf ihm läuft eine Lagerbuchse 83,
in die in der gleichen Weise, wie im Zusammenhang mit der Lagerbuchse 82 des unteren Radiallagers 62 gemäß Fig.8 bereits beschrieben, eine Laufhülse 93 mit Radialkragen 97 eingebracht ist, mittels dessen sie sich und die Lagerbuchse 83 drehbar gegenüber einem endseitigen Lagerbund 78 des drehfesten Lagerstiftes 73 abstützt. Die Laufhülse 93 ist wiederum in Trockenlaufeigenschaften aufweisendem Material, wie beispielsweise Polytetrafluoräthylen (Teflon), ausgeführt. Fig.11 wiederum zeigt ein unteres Radiallager 64, das für Aufnahme von Axialkräften geeignet und daher für. Zusammenwirken mit einem oberen Radiallager 61 gemäß Fig.8 bestimmt ist und bei dem der Lagerstift 74 drehbar angeordnet ist. Dieses untere Radiallager 64 zeichnet sich durch geringe axiale Baulänge aus, die hin und wieder erwünscht sein kann.

Bei diesem unteren Radiallager 64 ist eine Lagerbuchse 84 am Stützstern 67 des ortsfest gehaltenen Segmentes 23 der Käfigkuppel 22 festgelegt. Gegenüber seiner nach oben weisenden Stirnfläche stützt sich unter Zwischenschaltung einer Laufhülse 94 aus reibungsverminderndem Material mit Trockenlaufeigenschaften, beispielsweise Polytetrafluoräthylen, mit Radialkragen 97 ein Bund 77 des in der Laufhülse 94 laufenden Lagerstiftes 74 ab. An diesem Bund 77 sind die Radialstreben des Stützsterns 68 in geeigneter Weise, beispielsweise durch Verschweißen, festgelegt, mittels derer der drehbare Lagerstift 74 mit dem drehverschwenkbaren Segment 24 verbunden ist.

Bei allen Lagerausführungen, bei denen das untere Radiallager, sei dieses nun als Stehlager zur Aufnahme von Axialkräften, wie beispielsweise in Fig.8, oder als reines Radiallager mit axialem Bewegungsspiel, wie beispielsweise in Fig.9, ausgebildet, einen feststehend gehaltenen Lagerstift aufweist, kann bevorzugt dieser Lagerstift dafür ausgenutzt werden, seinerseits im Käfiginneren benötigte Einbauten, wie beispielsweise Papageienständer, Sitzstangen, Sitzblume, Tragbrücken für Futternäpfe oder dergleichen, zu tragen. In Fig.7 ist rein schematisch eine solche bevorzugte Ausführungsform der Erfindung dargestellt, indem nämlich von dem ins Käfiginnere hineinragenden freien Ende des ausreichende Länge aufweisenden Lagerstiftes 72 des unteren Stehlagers 62, das in Fig.8 in vergrößertem Maßstabe deutlicher dargestellt ist, zur Abstützung einer Futternapftragbrücke 87 benutzt wird. Diese weist eine Hülse 88 auf, die über das freie Ende 71 des Lagerstiftes 72 geschoben und mittels eines geeigneten Feststellorgans, wie beispielsweise einer Klemmschraube 69, wie diese in Fig. 7 schematisch dargestellt ist, oder aber mittels eines Splintes 70, der durch miteinander fluchtende Löcher 80a in der Hülse 88 und 80b im Lagerstift 72 hindurchgesteckt werden kann, wie in Fig.8 beispielsweise dargestellt, festgelegt ist. Die Hülse 88 trägt zwei Tragstreben 89, welche jeweils einen Futternapf 90 in geeigneter Stellung abstützen, wie in Fig.7 schematisch dargestellt. Es ist ersichtlich, daß in der gleichen Weise statt einer solchen Futternapftragbrücke 87 vom freien Ende 79 des feststehenden Lagerstiftes 72 auch andere erforderliche oder zweckdienliche Einbauten so abgestützt werden können, daß sie ohne Veränderung ihrer Stellung relativ beispielsweise zum Stützstern 67 des standfest gehaltenen Segmentes 23 der Käfigkuppel 22 und damit auch ohne Veränderung ihrer relativen Stellung zu diesem Segment 23 zusammen mit der geschlossenen Käfigkuppel 22 abgehoben werden können, wenn beispielsweise eine Reinigung der Bodenschale 21 (Fig.3) erforderlich werden sollte, was natürlich die beabsichtigte vorteilhafte Folge hat, daß auf diesen Einbauten niedergelassene Tiere beim Abheben der Käfigkuppel 22 auf diesen verharren bleiben und daher mit der Käfigkuppel 22 bequem in dieser geborgen verbleibend abgestellt werden können, um dann in der gleichen Weise wieder mit der Käfigkuppel 22 auf die gereinigte oder desinfizierte oder sonstwie behandelte Bodenschale 21 aufgesetzt zu werden.

Im übrigen ist noch darauf aufmerksam zu machen, daß statt
der Lagerbuchsen 81, 82, 83, 84, 85 und 86 aus Metall mit
ihren jeweils eingesetzten Laufhülsen 91 bzw. 92 bzw. 93
bzw. 94 bzw. 95 bzw. 96 aus gute Trockenlaufeigenschaften
aufweisendem Material, wie beispielsweise Polytetrafluoräthylen (Teflon), die jeweiligen Lagerbuchsen selbst als
Ganzes aus entsprechendem Kunststoffmaterial gebildet
sein können, wobei dann die Befestigung der Verbindungselemente zu den jeweils zugeordneten Segmenten 23 bzw. 24,
wie beispielsweise die Radialstreben 67 bzw. 68, in geeigneter
auch bekannter Weise an diesen Lagerbuchsen erfolgt.
Dies kann beispielsweise durch geeignete Klemmringe geschehen.
Auch die Haltehülse 88 gemäß Fig.3 und 4 kann aus Kunststoff
gebildet sein.

Im übrigen ist die Erfindung nicht auf die dargestellten
Ausführungsbeispiele beschränkt, vielmehr stehen dem Fachmann vielfältige Möglichkeiten offen, sie an die jeweiligen
konstruktiven Gegebenheiten und/oder die Forderungen des
einzelnen Einsatzfalles durch andere Kombination ihrer
Merkmale oder deren Austausch gegen gleichwirkende Mittel
anzupassen, ohne dadurch den Rahmen der Erfindung zu verlassen. Insbesondere sind auch andere Ausführungen der
oberen und unteren Radiallager ungeachtet deren jeweiliger
Ausbildung als Hänge- oder Stehlager möglich.

- 1 -

Ansprüche
=================

1. Heimtierkäfig, insbesondere Papageienkäfig, mit einer den Raum
   oberhalb einer Bodenschale begrenzenden Käfigkuppel vorzugsweise aus Gitterwerk, dadurch gekennzeichnet, daß die Käfigkuppel (2 bzw. 12 bzw. 22 bzw. 42 bzw. 52) aus mindestens
   zwei Segmenten (3, 4, 5 bzw. 13, 14 bzw. 23, 24 bzw. 43, 44
   bzw. 43, 45 bzw. 43, 46, 47 bzw. 53, 54, 55) besteht, von
   denen mindestens eines (3 bzw. 13 bzw. 23 bzw. 43 bzw. 53)
   standfest mit der Bodenschale (2 bzw. 12 bzw. 22 bzw. 42
   bzw. 52) verbunden und mindestens eines (4, 5 bzw. 14 bzw.
   24 bzw. 44 bzw. 45 bzw. 46, 47 bzw. 54, 55) mit zumindest dem
   überwiegenden Teil seiner Länge gegenüber einem benachbarten
   standfest gehaltenen Segment (3 bzw. 13 bzw. 23 bzw. 43, bzw.
   53) verschwenkbar ist.

2. Heimtierkäfig nach Anspruch 1, dadurch gekennzeichnet, daß die Käfigkuppel (2 bzw. 12) vieleckigen Querschnitt aufweist.

3. Heimtierkäfig nach Anspruch 1 oder 2, dadurch gekennzeichnet, daß die Käfigkuppel (2 bzw. 12) quadratischen Querschnitt aufweist (Fig. 1, 2 und 6).

4. Heimtierkäfig nach Anspruch 1 oder 2, dadurch gekennzeichnet, daß die Käfigkuppel sechseckigen Querschnitt aufweist (Fig. 5).

5. Heimtierkäfig nach Anspruch 1, dadurch gekennzeichnet, daß die Käfigkuppel (22) Kreisquerschnitt aufweist.

6. Heimtierkäfig nach einem der vorhergehenden Ansprüche, dadurch gekennzeichnet, daß die Bodenschale (11 bzw. 21) der Außenkontur des Querschnittes der Käfigkuppel (12 bzw. 22) etwa entsprechende lichte Abmessungen zwischen ihren hochstehenden Wandungen (11a bzw. 21a) aufweist und daß die Käfigkuppel (11 bzw. 21) mit einem unteren Rand zumindest ihres standfest gehaltenen Segmentes (13 bzw. 23) auf dem Boden der Bodenschale (11 bzw. 21) aufstehend in diese eingesetzt ist.

7. Heimtierkäfig nach einem der Ansprüche 1 bis 5, dadurch gekennzeichnet, daß die Bodenschale (1) zumindest im Bereich des oberen Randes ihrer hochstehenden Wandungen (1a) der Innenkontur des Querschnittes der Käfigkuppel (2) etwa entsprechende Abmessungen aufweist und daß die Käfigkuppel (2) mit einem unteren Rand (2a) auf dem oberen Rand der Bodenschalenwandungen (1a) aufsitzend in an sich bekannter Weise an den Bodenschalen-wandungen (1a) lösbar festgelegt ist (6).

8. Heimtierkäfig nach einem der Ansprüche 1 bis 5, dadurch gekennzeichnet, daß die Bodenschale (41 bzw. 51 bzw. 21) kreisrund und mit einem dem die Außenkontur des Querschnittes der Käfigkuppel (42 bzw. 52 bzw. 22) etwa umschreibenden Kreis entsprechenden lichten Durchmesser zwischen ihren Wandungen ausgebildet und die Käfigkuppel (42 bzw. 52 bzw. 22) mit einem
unteren Rand zumindest ihres standfest gehaltenen Segmentes
(43 bzw. 53 bzw. 23) auf dem Boden der Bodenschale (41 bzw. 51
bzw. 21) aufstehend in diese eingesetzt ist.

9. Heimtierkäfig nach einem der Ansprüche 1 bis 5, dadurch gekennzeichnet, daß die Bodenschale zumindest im Bereich des oberen
Randes ihrer Wandungen kreisrund und mit einem dem die Innenkontur des Querschnittes der Käfigkuppel etwa umschreibenden
Kreis entsprechenden Durchmesser ausgebildet ist und die Käfigkuppel mit einem unteren Rand im Bereich ihrer Vieleckecken auf
dem oberen Rand der Bodenschalenwandungen aufsitzend in an sich
bekannter Weise an den Bodenschalenwandungen lösbar festgelegt ist.

10. Heimtierkäfig nach einem der vorhergehenden Ansprüche, dadurch gekennzeichnet, daß die Käfigkuppel (2 bzw. 12) durch Kippverschwenkung des verschwenkbaren Segmentes (4 bzw. 5 bzw. 14) gegenüber dem
benachbarten standfest gehaltenen Segment (3 bzw. 13) öffenbar ist.

11. Heimtierkäfig nach Anspruch 10, dadurch gekennzeichnet, daß das
verschwenkbare Segment (4 bzw. 5) am benachbarten standfest gehaltenen Segment (3) um eine vertikale Achse (A bzw. B) verschwenkbar angelenkt ist.

12. Heimtierkäfig nach Anspruch 10, dadurch gekennzeichnet, daß das
verschwenkbare Segment (14) am benachbarten standfest gehaltenen
Segment (13) um eine horizontale Achse (C) verschwenkbar angelenkt ist.

13. Heimtierkäfig nach einem der Ansprüche 1 bis 9, dadurch gekennzeichnet, daß die Käfigkuppel (22) durch Drehverschwenkung des
verschwenkbaren Segmentes (24) gegenüber dem benachbarten standfest gehaltenen Segment (23) öffenbar ist.

14. Heimtierkäfig nach Anspruch 13, dadurch gekennzeichnet, daß das verschwenkbare Segment (24) um eine vertikale Achse (D) drehbar in einem vom benachbarten standfest gehaltenen Segment (23) getragenen Drehlager (27) aufgehängt ist.

15. Heimtierkäfig nach Anspruch 14, dadurch gekennzeichnet, daß das Drehlager (27) einen vom standfest gehaltenen Segment (23) getragenen Lagerstift (31) und einen auf diesem frei drehbaren Ring (34) aufweist, der das drehverschwenkbare Segment (24) trägt.

16. Heimtierkäfig nach Anspruch 15, dadurch gekennzeichnet, daß der Lagerstift (31) in einer Buchse (39) gehalten ist, die von einer im Deckbereich des standfest gehaltenen Segmentes (23) angeordneten Scheibe (23) gehalten ist, und daß der das drehverschwenkbare Segment (24) tragende Ring als auf einem frei aus dieser Buchse (39) herausragenden Ende des Lagerstiftes (31) frei drehverschwenkbare Scheibe (34) ausgebildet ist, an welcher das drehverschwenkbare Segment (24) hängt.

17. Heimtierkäfig nach Anspruch 15 oder 16, dadurch gekennzeichnet, daß zwischen beiden gegeneinander drehverschwenkbaren Segmenten (23 bzw. 24) ein zum Lagerstift (31) konzentrischer Abstandshaltering (39a bzw. 35) angeordnet ist.

18. Heimtierkäfig nach Anspruch 17, dadurch gekennzeichnet, daß der Abstandshaltering, (39a) an einem der gegeneinander drehverschwenkbaren Segmente (23 bzw. 24) festgelegt ist.

19. Heimtierkäfig nach Anspruch 17, dadurch gekennzeichnet, daß der Abstandshaltering (35) gegenüber beiden gegeneinander drehverschwenkbaren Segmenten (23 bzw. 24) drehbeweglich ist.

20. Heimtierkäfig nach einem der Ansprüche 17 bis 19, dadurch gekennzeichnet, daß zwischen Abstandshaltering (39a) und gegenüber diesem drehverschwenkbarem segmentfestem Bauteil (34) eine Einrichtung (35) zur Verminderung der Reibung angeordnet ist.

21. Heimtierkäfig nach Anspruch 20, dadurch gekennzeichnet, daß die Einrichtung zur Verminderung der Reibung als Kugellager ausgebildet ist.

22. Heimtierkäfig nach Anspruch 20, dadurch gekennzeichnet, daß die Einrichtung zur Verminderung der Reibung als Zwischenlagscheibe (35) aus reibungsarmem Material, wie beispielsweise Polytetrafluoräthylen (Teflon), ausgebildet ist.

23. Heimtierkäfig nach einem der Ansprüche 15 bis 22, dadurch gekennzeichnet, daß das obere Ende des Lagerstiftes (31) aus dem Drehlager (27) herausragt und als Traggriff oder Aufhängöse (32) ausgebildet ist.

24. Heimtierkäfig nach Anspruch 15, dadurch gekennzeichnet, daß das Drehlager (27) als Kugellager ausgebildet ist, dessen einer Lagerring mit dem standfest gehaltenen Segment (23) und dessen anderer Lagerring mit dem gegenüber diesem drehverschwenkbaren Segment (24) verbunden ist.

25. Heimtierkäfig nach einem der Ansprüche 13 bis 24, dadurch gekennzeichnet, daß das drehverschwenkbare Segment (24) auf einem bodenschalenfesten Stift zusätzlich geführt ist.

26. Heimtierkäfig nach einem der Ansprüche 13 bis 24, dadurch gekennzeichnet, daß das drehverschwenkbare Segment (24) mittels eines in seinem unteren Bereich vorzugsweise in der Bodenschale (21) verdeckt liegend angeordneten Stützringes (26) zusätzlich geführt ist, der auf einem im unteren Bereich des standfest gehaltenen Segmentes (23) angeordneten Gegenring (25) läuft.

27. Heimtierkäfig nach Anspruch 26, dadurch gekennzeichnet, daß Stützring (26) und Gegenring (25) mit Abstand zum Boden

der Bodenschale ( 2 bzw. 12 bzw. 22 bzw. 42 bzw. 52), vorzugsweise etwa in Höhe des Bodenschalenrandes, angeordnet ist.

28. Heimtierkäfig nach einem der Ansprüche 13 bis 27, dadurch gekennzeichnet, daß das standfest gehaltene Segment (23) das
drehverschwenkbare Segment (24) bei dessen Drehverschwenkung
übergreifend ausgebildet ist.

29. Heimtierkäfig nach einem der vorhergehenden Ansprüche, dadurch
gekennzeichnet, daß von mindestens einem standfest gehaltenen
Segment (3 bzw. 13 bzw. 23 bzw. 43 bzw. 53) der Käfigkuppel
(2 bzw. 12 bzw. 22) über eine Radialstrebe (67 bzw. 107),
vorzugsweise über einen mehrstrebigen Stützstern, die bzw.
der die Ebene des unteren Randes mindestens eines in Schließstellung befindlichen verschwenkbaren Segmentes (4, 5 bzw. 14
bzw. 24 bzw. 44 bzw. 45 bzw. 56, 47 bzw. 54, 55) untergreift,
ein ins Innere der Käfigkuppel (2 bzw. 12 bzw. 22) hineinragender Tragstift (72 bzw. 104) getragen ist, auf dem ein
Papageienständer, eine Sitzstange, ein Sitzbaum (100), eine
Tragbrücke (89) für Futternäpfe (90) oder dergleichen angeordnet ist.

30. Heimtierkäfig nach Anspruch 29 mit mindestens einem gegenüber einem benachbarten standfest gehaltenen Segment um
eine vertikale Achse drehverschwenkbaren Segment, dadurch
gekennzeichnet, daß die den Tragstift (104) tragende Radialstrebe (67) bzw. der mehrstrebige Stützstern den unteren Rand mindestens eines drehverschwenkbaren Segmentes
(24) in dessen Schließstellung untergreift.

31. Heimtierkäfig nach Anspruch 29 oder 30, dadurch gekennzeichnet, daß der Papageienständer, die Sitzstange, der
Sitzbaum (100), die Futternapftragbrücke (89) oder dergleichen am Tragstift (72 bzw. 104) durch Verschrauben,

Versplinten, Verriegeln oder dergleichen lösbar festgelegt ist.

32. Heimtierkäfig nach einem der Ansprüche 29 bis 31, dadurch
gekennzeichnet, daß der Tragstift (72 bzw. 104) in der
Bodenschale (1 bzw. 11 bzw. 21) versenkt angeordnet ist.

33. Heimtierkäfig nach einem der Ansprüche 1 bis 9 mit einer
Käfigkuppel, die aus mindestens zwei Segmenten besteht,
von denen mindestens eines standfest mit der Bodenschale
verbunden und mindestens eines mit zumindest dem überwiegenden Teil seiner Länge gegenüber einem benachbarten
standfest gehaltenen Segment um eine vertikale Achse drehverschwenkbar ist, dadurch gekennzeichnet, daß die Drehachse (D) durch zwei von einander unabhängige, von mindestens einem standfest mit der Bodenschale (21) verbundenen Segment (23) der Käfigkuppel (22) getragene Radiallager (61, 62 bzw. 61, 64 bzw. 63, 66 bzw. 65,66) definiert
ist, gegenüber dessen mit diesem standfesten Segment (23)
verbundenem Lagerteil (71 bzw. 72 bzw. 84 bzw. 73 bzw. 76
bzw. 85) sich jeweils ein jeweils mit mindestens einem drehverschwenkbaren Segment (24) verbundenes Lagerteil (81 bzw.
82 bzw. 74 bzw. 83 bzw. 86 bzw. 75) drehverschwenkbar abstützt.

34. Heimtierkäfig nach Anspruch 33, dadurch gekennzeichnet, daß
das mit dem drehverschwenkbaren Segment (24) verbundene,
drehverschwenkbare Lagerteil ein Lagerstift (74 bzw. 75)
ist, der in einer das standfest gehaltene Lagerteil bildenden Lagerbuchse (84 bzw. 85) geführt ist, die von mindestens einem standfest mit der Bodenschale (21) verbundenen Segment (23) der Käfigkuppel (22) getragen ist.

35. Heimtierkäfig nach Anspruch 33, dadurch gekennzeichnet, daß
das mit dem drehverschwenkbaren Segment (24) verbundene,
drehverschwenkbare Lagerteil eine Lagerbuchse (81 bzw. 82
bzw. 83 bzw. 86) ist, die auf einem das standfest gehaltene
Lagerteil bildenden Lagerstift (71 bzw. 72 bzw. 73 bzw. 76)
läuft, der von mindestens einem standfest mit der Bodenschale (21) verbundenen Segment (23) der Käfigkuppel (22) getragen ist.

36. Heimtierkäfig nach einem der Ansprüche 33 bis 35, dadurch
gekennzeichnet, daß das obere Radiallager (63 bzw. 65)
in an sich bekannter Weise als Axialkräfte aufnehmendes
Hängelager ausgebildet ist, während das untere Radiallager (66) als reines Radiallager mit axialem Bewegungsspiel ausgebildet ist, dessen eines Lagerteil, nämlich
Lagerbuchse (86) oder Lagerstift (76), mit mindestens
einem standfest gehaltenen Segment (23) und dessen anderes
Lagerteil, nämlich Lagerstift (76) oder Lagerbuchse (86 ),
mit mindestens einem drehverschwenkbaren Segment (24)
der Käfigkuppel (22) verbunden ist.

37. Heimtierkäfig nach einem der Ansprüche 33 bis 35, dadurch
gekennzeichnet, daß das untere Radiallager (62 bzw. 64) als
Axialkräfte aufnehmendes Stehlager ausgebildet ist,
während das obere Radiallager (61) als reines Radiallager mit axialem Bewegungsspiel ausgebildet ist, dessen eines Lagerteil, nämlich Lagerbuchse (61) oder Lagerstift (71), mit mindestens einem standfest gehaltenen
Segment (23) und dessen anderes Lagerteil, nämlich
Lagerstift (71) oder Lagerbuchse (81), mit mindestens
einem drehverschwenkbaren Segment (24) der Käfigkuppel
(22) verbunden ist.

38.) Heimtierkäfig nach einem der Ansprüche 33 bis 37, dadurch gekennzeichnet, daß das standfest gehaltene Lagerteil (72 bzw. 84 bzw. 76) des unteren Radiallagers (62 bzw. 64 bzw. 66) in der Bodenschale (21) versenkt und vorzugsweise mit seinem bodenschalenseitigen Ende nahe deren Boden angeordnet ist und eine ausreichende axiale Länge aufweist, um das drehverschwenkbare Lagerteil (24) in Abstand vom Boden der Bodenschale (21) geführt zu halten.

39.) Heimtierkäfig nach einem der Ansprüche 33 bis 38, dadurch gekennzeichnet, daß von mindestens einem standfest gehaltenen Segment (23) der Käfigkuppel (22) ein deren Kontur etwa folgender Tragring (25) getragen ist, der über mindestens eine Radialstrebe (67), vorzugsweise über einen mehrstrebigen Stützstern das standfest gehaltene Lagerteil (72 bzw. 84 bzw. 76) des unteren Radiallagers (62 bzw. 64 bzw. 66) abstützt, und daß von mindestens einem drehverschwenkbaren Segment (24) der Käfigkuppel (22) ein deren Kontur gleichfalls etwa folgender weiterer Tragring (26) getragen ist, der über mindestens eine Radialstrebe (68), vorzugsweise über einen mehrstrebigen Stützstern das drehverschwenkbare Lagerteil (82 bzw. 74 bzw. 86) des unteren Radiallagers (62 bzw. 64 bzw. 66) abstützt.

40.) Heimtierkäfig nach Anspruch 38, dadurch gekennzeichnet, daß der von mindestens einem standfest gehaltenen Segment (23) getragene Tragring (25) als Standring ausgebildet ist, mit dem sich der bodenschalenfest gehaltene Teil (23) der Käfigkuppel (22) gegenüber der Bodenschale (21) abstützt, und daß der von mindestens einem drehverschwenkbaren Segment (24)
der Käfigkuppel (22) getragene Tragring (26) mit einem
Vielfachen der axialen Abmessung des sich als Standring
gegenüber der Bodenschale (21) abstützenden anderen Tragringes (25) entsprechendem Abstand zum Boden der Bodenschale (21) angeordnet ist.

41.) Heimtierkäfig nach einem der Ansprüche 33 bis 40,
dadurch gekennzeichnet, daß zwischen standfest gehaltenen
und drehverschwenkbarem Teil (71, 81 bzw. 72, 82 bzw. 73,
83 bzw. 84, 74 bzw. 85, 75 bzw. 76, 86) der Radiallager
(61, 62 bzw. 61, 64 bzw. 63, 66 bzw. 65, 66) jeweils eine
Laufhülse (91 bzw. 92 bzw. 93 bzw. 94 bzw. 95 bzw. 96)
aus reibungsverminderndem Material, vorzugsweise aus
Trockenlaufeigenschaften aufweisendem Material, wie beispielsweise Tetrafluoräthylen, angeordnet ist.

42.) Heimtierkäfig nach einem der Ansprüche 33 bis 41 mit
mit mindestens einem drehverschwenkbaren Segment verbundenem Lagerstift des Axialkräfte aufnehmenden, vorzugsweise des unteren Radiallagers, der in einer standfest
gehaltenen Lagerbuchse läuft, dadurch gekennzeichnet, daß
der Lagerstift (74 bzw. 75) einen Bund (77)aufweist, mit dem er
sich auf einer nach oben weisenden Stirnfläche der standfest gehaltenen Lagerbuchse (84 bzw. 85) für Drehbewegung
abstützt.

43.) Heimtierkäfig nach einem der Ansprüche 33 bis 41 mit mit
mindestens einem drehverschwenkbaren Segment verbundener
Lagerbuchse des Axialkräfte aufnehmenden, vorzugsweise des
unteren Radiallagers, die auf einem standfest gehaltenen
Lagerstift läuft, dadurch gekennzeichnet, daß der Lagerstift (72 bzw. 73) einen Bund (78) aufweist, gegenüber
dem sich eine Stirnfläche der drehverschwenkbaren Lagerbuchse (82 bzw. 83) für Drehbewegung abstützt.

44.) Heimtierkäfig nach Anspruch 42 oder 43, dadurch gekennzeichnet, daß zwischen den sich aufeinander abstützenden Stirnflächen von Lagerstiftbund (77) und Lagerbuchse (84 bzw. 85) eine Scheibe aus reibungsverminderndem Material, vorzugsweise aus Trockenlaufeigenschaften aufweisendem Material, wie beispielsweise Tetrafluoräthylen, angeordnet ist.

45.) Heimtierkäfig nach Anspruch 41 und 4, dadurch gekennzeichnet, daß zwischen standfest gehaltenem und drehverschwenkbarem Teil (72, 82 bzw. 73, 83 bzw. 84, 74 bzw. 85, 75) des Axialkräfte aufnehmenden Radiallagers (62 bzw. 63 bzw. 64 bzw. 65) eine Laufhülse (92 bzw. 93 bzw. 94 bzw. 95) aus reibungsverminderndem Material, vorzugsweise aus Trockenlaufeigenschaften aufweisendem Material, wie beispielsweise Tetrafluoräthylen, mit einem nach außen wegstehenden Radialkragen (97) die der freien Stirnfläche des Lagerstiftbundes (77 bzw. 78) zugewandte Stirnfläche der Lagerbuchse (82 bzw. 83 bzw. 84 bzw. 85) überragend angeordnet ist.

46.) Heimtierkäfig nach einem der Ansprüche 34 bis 43, dadurch gekennzeichnet, daß die Lagerbuchse (81 bzw. 82 bzw. 83 bzw. 84 bzw. 85 bzw. 86) aus reibungsverminderndem Material, vorzugsweise aus Trockenlaufeigenschaften aufweisendem Material, wie beispielsweise Tetrafluoräthylen, gebildet ist.

47.) Heimtierkäfig nach einem der Ansprüche 33 bis 46 mit mit mindestens einem drehverschwenkbaren Segment verbundener Lagerbuchse des unteren Radiallagers, die auf einem standfest gehaltenen Lagerstift läuft, dadurch gekennzeichnet, daß das freie Ende (79) des Lagerstiftes (72) durch die drehverschwenkbare Lagerbuchse (82) hindurchgreifend ins Innere der Käfigkuppel (22) ragt und daß auf ihm ein Papageienständer, eine Sitzstange, ein Sitzbaum, eine Tragbrücke für Futternäpfe oder dergleichen (87) angeordnet ist.

- 12 -

48.) Heimtierkäfig nach Anspruch 47, dadurch gekennzeichnet, daß der Papageienständer, die Sitzstange, der Sitzbaum, die Futternapftragbrücke oder dergleichen (87) am freien, ins Innere der Käfigkuppel (22) hineinragenden Ende (79) des Lagerstiftes (72) durch Verschrauben (69), Versplinten (70), Verriegeln oder dergleichen lösbar festgelegt ist.

49.) Heimtierkäfig nach einem der vorhergehenden Ansprüche, dadurch gekennzeichnet, daß die Bodenschale (2 bzw. 12 bzw. 22 bzw. 42 bzw. 52) auf einem an sich bekannten Standfuß (30) angeordnet ist.

50.) Heimtierkäfig nach einem der vorhergehenden Ansprüche, dadurch gekennzeichnet, daß er in fertigmontiertem und geöffnetem Zustand eine Hälfte einer gegenüber Beschädigungen und/oder Deformierungen gefahrenfrei versendbaren Transporteinheit bildet, deren andere Hälfte durch einen gleichartigen, gleichfalls fertigmontierten und geöffneten Heimtierkäfig gebildet ist, der seitenverkehrt mit seiner Käfiginnenraumöffnung der Käfiginnenraumöffnung des anderen Heimtierkäfigs zugewandt gegen diesen gestülpt ist.

Patentanwalt

0005247

1/4

Fig. 1

Fig. 5

Fig. 6

Fig. 2

Fig. 3

Fig. 4

Fig. 7

Fig. 10

Fig. 11

Fig. 8

Fig. 9

0005247